# FASCICULE DE BREVET EUROPEEN

(11) **EP 3 332 504 B1**
(45) Date de publication et mention de la délivrance du brevet: **30.10.2019**
(21) Numéro de dépôt: 16757324.5
(22) Date de dépôt: 03.08.2016
(51) Int. Cl.: H04L 9/00, G09C 5/00, G09C 1/00

(54) **PROCÉDÉ DE SÉCURISATION D'UNE TRANSACTION A PARTIR D'UN TERMINAL NON SÉCURISE**
VERFAHREN ZUR SICHERUNG EINER TRANSAKTION VON EINEM NICHTSICHEREN ENDGERÄT
METHOD FOR SECURING A TRANSACTION FROM A NON-SECURE TERMINAL

(30) Priorité: 04.08.2015 FR 1557534
(43) Date de publication de la demande: 13.06.2018
(73) Titulaire: Skeyecode, 75008 Paris (FR)
(72) Inventeur: LELEU, Jean-Luc, 75005 Paris (FR)
(74) Mandataire: de Roquemaurel, Bruno
(86) Numéro de dépôt international: PCT/FR2016/052023
(87) Numéro de publication internationale: WO 2017/021657

(56) Documents cités:
- EP-A1- 2 372 945
- EP-A1- 2 887 610
- WO-A1-2012/107698
- WO-A2-2014/108835
- FR-A1- 2 959 896
- "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac/
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1 octobre 1996 (1996-10-01), XP001525010, ISBN: 978-0-8493-8523-0 Extrait de l'Internet: URL:http://www.cacr.math.uwaterloo.ca/hac/
- KIMMO JÃ RVINEN ET AL: "Garbled Circuits for Leakage-Resilience: Hardware Implementation and Evaluation of One-Time Programs", INTERNATIONAL ASSOCIATION FOR CRYPTOLOGIC RESEARCH,, vol. 20100617:125539, 17 juin 2010 (2010-06-17), pages 1-17, XP061004126,
- TORE KASPER FREDERIKSEN ET AL: "Fast and Maliciously Secure Two-Party Computation Using the GPU", INTERNATIONAL ASSOCIATION FOR CRYPTOLOGIC RESEARCH,, vol. 20131230:111126, 27 décembre 2013 (2013-12-27), pages 1-21, XP061015258,

## Description

La présente invention concerne un procédé d'authentification entre un terminal et un serveur distant.

De plus en plus de services sont accessibles par l'intermédiaire d'un terminal connecté au réseau Internet, y compris des services bancaires. En particulier, le commerce électronique a connu un fort développement. Les terminaux utilisés dans ce contexte peuvent être de type ordinateur personnel, tablette numérique, téléphone mobile intelligent ("smartphone"). Généralement, ces terminaux comprennent un processeur principal, un processeur graphique GPU (Graphics Processing Unit) connecté ou susceptible de se connecter à un écran d'affichage, des circuits de connexion à un réseau de transmission de données tel que le réseau Internet, et des organes de commande tels qu'un clavier, une souris, ou une surface tactile associée à l'écran d'affichage.

L'accès à des services dits "en ligne" au moyen de tels terminaux soulève des problèmes de sécurité. En effet, il est possible d'installer dans le terminal, et de faire exécuter par le processeur principal du terminal, un programme dit "malveillant" ayant accès à l'ensemble de la mémoire accessible par le processeur principal, ainsi qu'aux données affichées et introduites au moyen d'un clavier ou de positions désignées sur une image affichée à l'écran. Un tel programme malveillant peut être configuré pour espionner d'éventuelles transactions conduites à partir du terminal et de récupérer d'éventuelles données secrètes introduites ou manipulées durant ces transactions pour les transmettre par le réseau.

Pour assurer la sécurité de telles transactions, il a déjà été proposé d'utiliser comme élément de sécurité et de calcul cryptographique un processeur sécurisé tel que le processeur d'une de carte SIM (Subscriber Identification Module) équipant en général les téléphones mobiles. Pour pouvoir exécuter une ou plusieurs applications de paiement, le processeur sécurisé doit pouvoir mémoriser autant de clés cryptographiques secrètes que d'applications de paiement. Or le chargement d'une application dans la mémoire d'un processeur sécurisé est une opération complexe devant être hautement sécurisée. A cet effet, elle nécessite des intervenants externes comme un Gestionnaire de Service de Confiance ("Trusted Service Manager"). Comme les cartes SIM sont émises par un opérateur de téléphonie mobile, celui-ci peut refuser l'installation de telles applications dans la carte. En outre, en cas de vol ou lors d'une opération de maintenance du téléphone, le processeur de la carte SIM peut faire l'objet d'attaques par un fraudeur visant à découvrir les clés secrètes qu'il mémorise.

L'accès à des fonctions sécurisées installées dans le processeur d'une carte SIM nécessite généralement la saisie d'un code secret (code PIN) au moyen de l'organe de commande connecté au processeur principal du terminal. Il en résulte qu'un code secret saisi par l'utilisateur transite nécessairement par le processeur principal. Un logiciel malveillant exécuté par le processeur principal peut donc avoir accès à ce code secret.

Pour la saisie d'un code secret, il a également été proposé d'afficher l'image d'un clavier dont les touches ont des positions définies aléatoirement. Cette solution n'empêche pas un programme malveillant d'obtenir la combinaison de touches introduite par l'utilisateur en procédant à une copie d'écran pour obtenir l'image du clavier et en interceptant la position de chacune des désignations effectuées par l'utilisateur au moyen d'une souris ou d'un écran tactile.

On a également proposé d'envoyer à l'utilisateur un code à usage unique par une autre liaison de communication (par exemple par SMS), ce code devant être saisi par l'utilisateur pour valider une transaction en cours. Cette solution implique des manipulations supplémentaires pour l'utilisateur, et un coût supplémentaire pour l'envoi du code à usage unique. Cette solution s'avère également peu adaptée aux transactions conduites à partir d'un téléphone mobile intelligent ou d'une tablette numérique.

Par ailleurs, il a déjà été proposé d'utiliser la puissance de calcul des processeurs graphiques installés dans les ordinateurs pour effectuer des calculs cryptographiques. En effet, un tel processeur dispose d'une architecture de calcul parallèle qui s'avère adaptée à la réalisation de certains calculs cryptographiques comme des calculs de chiffrement et déchiffrement symétriques ou asymétriques. Toutefois, un processeur graphique ne dispose généralement pas de mémoire non volatile. Il n'est donc pas possible d'y stocker une application ou une clé secrète, sans que celles-ci disparaissent à chaque extinction de l'ordinateur. Il en résulte un problème de conservation de données secrètes nécessaires à la conduite de transactions sécurisées.

En outre, le processeur graphique ne peut pas communiquer directement avec un serveur externe. Toutes les données d'une transaction doivent donc être relayées par le processeur principal de l'ordinateur assurant la gestion de circuits de communication de l'ordinateur. Il en résulte qu'un programme malveillant installé dans l'ordinateur peut récupérer et mémoriser toutes les données de transaction échangées entre le processeur graphique et le serveur. Même si les données de transaction sont chiffrées avant d'être transmises, le programme malveillant peut réutiliser les données de transaction chiffrées pour conduire une transaction identique à celle correspondant aux données mémorisées.

La demande de brevet WO 2012/107698 (US 2014/0040633) décrit un procédé de transaction faisant intervenir le processeur graphique pour établir une liaison sécurisée avec un serveur distant ou un processeur sécurisé. Le processeur graphique est configuré pour afficher une image d'un clavier dont les touches sont à des positions aléatoires. Cette image est décomposée différentes en trames inintelligibles générées par un procédé de cryptographie visuelle, qui sont affichées successivement par le processeur graphique. La fréquence d'affichage des trames est ajustée pour exploiter la rémanence rétinienne de l'utilisateur pour que ce dernier puisse reconstituer l'image à partir de plusieurs trames affichées successivement. Ainsi, un programme malveillant exécuté par le processeur principal du terminal ne peut pas récupérer l'image reconstituée par rémanence rétinienne, en effectuant une copie d'écran, étant donné que la fréquence d'affichage des trames est très supérieure à la cadence à laquelle le processeur principal peut effectuer des copies d'écran.

Cependant, cette solution ne garantit pas qu'un attaquant ne puisse pas reconstituer l'image affichée ou la partie présentant des données sensibles, à partir de copies d'écran partielles successives.

Il peut donc être souhaitable de protéger des données secrètes, et plus généralement, des données sensibles comme des données de transaction, lors de leur transit dans un terminal disposant d'un processeur graphique, ou lors de leur transmission entre un tel terminal et un serveur, ou encore lorsqu'elles sont saisies au moyen d'un clavier du terminal.

Des modes de réalisation peuvent concerner un procédé d'authentification d'un utilisateur par un processeur sécurisé, le procédé comprenant des étapes consistant à : exécuter par un terminal de l'utilisateur un programme impénétrable, configurant le terminal pour afficher sur un écran d'affichage du terminal une image présentant des zones à sélectionner associées chacune à un libellé ou une icône et ayant une répartition dans l'image définie par une donnée aléatoire, l'image comprenant des trames non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur, recueillir par le terminal des positions de l'écran d'affichage désignées par l'utilisateur au moyen d'un organe de commande du terminal, en relation avec l'image affichée, transmettre par le terminal au processeur sécurisé les positions désignées par l'utilisateur, et vérifier par le processeur sécurisé les positions désignées par rapport à l'image affichée, l'utilisateur étant authentifié si les positions désignées correspondent à une donnée d'authentification de l'utilisateur, connue du processeur sécurisé.

Selon un mode de réalisation, le procédé comprend une étape de transmission du programme impénétrable par le processeur sécurisé au terminal.

Selon un mode de réalisation, le programme configure le terminal pour afficher des données de transaction.

Selon un mode de réalisation, le programme transmis par le processeur sécurisé au terminal, configure le terminal pour afficher les libellés des zones à sélectionner dans l'image en des positions dans chaque zone et/ou avec une taille, et/ou avec une police de caractères, spécifiques du programme.

Selon un mode de réalisation, l'affichage de l'image par le terminal comprend des étapes successives de sélection d'une décomposition en motifs de pixels complémentaires pour chaque pixel ou groupe de pixels de l'image, représentant les libellés ou icônes de zone à sélectionner, et pour chaque décomposition sélectionnée, de génération de motifs de pixels complémentaires, de manière à ce que les libellés ou icônes des zones à sélectionner ne soient visibles à l'écran d'affichage que si les motifs de pixels complémentaires sont affichés successivement à une cadence adaptée pour exploiter la rémanence du système visuel de l'utilisateur.

Selon un mode de réalisation, l'affichage de l'image par le terminal comprend des étapes successives d'affichage par le terminal des motifs de pixels générés à des instants sélectionnés aléatoirement, espacés d'une durée variable telle que le système visuel humain puisse les combiner bien qu'ils soient affichés successivement, les instants d'affichage des motifs de pixels formant une image affichée étant distincts et indépendants les uns des autres.

Selon un mode de réalisation, le programme impénétrable transmis par le processeur sécurisé au terminal configure le terminal pour : générer une donnée aléatoire à partir de laquelle est définie la répartition des libellés ou icônes de zone à sélectionner dans l'image, et transmettre sous forme chiffrée la donnée aléatoire au processeur sécurisé, le procédé comprenant des étapes consistant à : déchiffrer la donnée aléatoire par le processeur sécurisé, déterminer par le processeur sécurisé la répartition des libellés ou icônes de zone à sélectionner dans l'image affichée par le terminal, et déterminer par le processeur sécurisé un code secret introduit par l'utilisateur à partir des positions désignées par l'utilisateur et la répartition des libellés ou icônes de zone à sélectionner.

Selon un mode de réalisation, le programme impénétrable comprend un module de génération de nombres aléatoires ou pseudo-aléatoire pour générer une donnée aléatoire utilisée pour sélectionner une décomposition en motifs de pixels complémentaires pour chaque pixel ou groupe de pixels de l'image représentant un libellé ou une icône de zone à sélectionner de l'image.

Des modes de réalisation peuvent également concerner un procédé de partage d'une donnée secrète entre un terminal d'utilisateur et un processeur sécurisé, le procédé comprenant des étapes consistant à : générer par le terminal une donnée secrète, chiffrer la donnée secrète, et transmettre la donnée secrète chiffrée au processeur sécurisé. Selon un mode de réalisation, le procédé comprend une étape d'exécution par le terminal, d'un programme impénétrable mettant en œuvre les étapes de génération et de chiffrement de la donnée secrète.

Selon un mode de réalisation, le procédé comprend une étape de transmission d'au moins une partie du programme impénétrable du processeur sécurisé au terminal.

Selon un mode de réalisation, le procédé comprend une étape d'établissement d'une liaison entre le terminal et le processeur sécurisé, la liaison étant sécurisée au moyen de la donnée secrète partagée uniquement entre le terminal et le processeur sécurisé.

Selon un mode de réalisation, la donnée secrète est générée aléatoirement ou pseudo-aléatoirement par un module de génération de nombres aléatoires ou pseudo-aléatoire du programme impénétrable.

Des modes de réalisation peuvent également concerner un procédé d'authentification d'un utilisateur par un processeur sécurisé, à partir d'un terminal connecté au processeur sécurisé, le procédé comprenant des étapes consistant à : charger dans le terminal un programme configurant le terminal pour exécuter le procédé de partage d'une donnée secrète, précédemment défini, afin de générer une donnée secrète partagée uniquement entre le terminal et le processeur sécurisé, et pour afficher sur un écran d'affichage du terminal une image présentant des zones à sélectionner associées chacune à un libellé ou une icône et ayant une répartition dans l'image définie à l'aide de la donnée secrète partagée, exécuter le programme par le terminal pour générer la donnée secrète partagée et afficher l'image à l'écran d'affichage, l'image comprenant des trames non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur, recueillir par le terminal des positions de l'écran d'affichage désignées par l'utilisateur au moyen d'un organe de commande du terminal, en relation avec l'image affichée, transmettre par le terminal au processeur sécurisé les positions désignées par l'utilisateur, et vérifier par le processeur sécurisé les positions désignées par rapport à l'image affichée, l'utilisateur étant authentifié si les positions désignées correspondent à une donnée d'authentification de l'utilisateur, connue du processeur sécurisé.

Selon un mode de réalisation, la donnée secrète partagée définit la répartition des zones à sélectionner de l'image affichée.

Selon un mode de réalisation, le programme configure le terminal pour afficher des données de transaction, les données de transaction apparaissant dans les trames de manière non intelligible pour l'utilisateur.

Selon un mode de réalisation, le programme transmis par le processeur sécurisé au terminal, configure le terminal pour afficher les libellés ou icônes de zones à sélectionner dans l'image en des positions dans chaque zone et/ou avec une taille, et/ou avec une police de caractères, spécifiques du programme.

Selon un mode de réalisation, l'affichage de l'image par le terminal comprend des étapes successives de sélection d'une décomposition en motifs de pixels complémentaires pour chaque pixel ou groupe de pixels de l'image, représentant des libellés ou icônes de zone à sélectionner, et pour chaque décomposition sélectionnée, de génération de motifs de pixels complémentaires, de manière à ce que les libellés ou icônes des zones à sélectionner ne soient visibles à l'écran d'affichage que si les motifs de pixels complémentaires sont affichés successivement à une cadence adaptée pour exploiter la rémanence du système visuel de l'utilisateur.

Selon un mode de réalisation, l'affichage de l'image par le terminal comprend des étapes successives d'affichage par le terminal des motifs de pixels générés à des instants sélectionnés aléatoirement, espacés d'une durée variable telle que le système visuel humain puisse les combiner bien qu'ils soient affichés successivement, les instants d'affichage des motifs de pixels formant une image affichée étant distincts et indépendants les uns des autres.

Selon un mode de réalisation, le programme impénétrable transmis par le processeur sécurisé au terminal configure le terminal pour occuper au moins à 80% les ressources de calcul du processeur exécutant le programme.

Selon un mode de réalisation, le programme impénétrable transmis par le processeur sécurisé et exécuté par le terminal comporte un circuit brouillé comprenant des portes logiques réparties en plusieurs rangs ordonnés, comprenant un premier rang rassemblant des portes logiques recevant exclusivement des valeurs d'entrée du circuit brouillé, les portes logiques d'un certain rang recevant exclusivement des valeurs issues de portes logiques appartenant à des rangs inférieurs ou des valeurs d'entrée du circuit brouillé, chaque porte logique étant associée à des valeurs brouillées représentant chaque valeur binaire possible de chaque bit d'entrée et de chaque bit de sortie de la porte logique, chaque porte logique étant associée à une table de vérité comprenant pour chaque combinaison possible des valeurs binaires d'entrée de la porte logique une valeur obtenue par chiffrement de la valeur brouillée représentant la valeur de sortie de la porte logique correspondant à la combinaison des valeurs binaires d'entrée de la porte logique, l'exécution du circuit brouillé par le processeur graphique comprenant des étapes consistant à : exécuter successivement les rangs de portes logiques en respectant l'ordre des rangs, l'exécution de chacun des rangs de portes logiques consistant à exécuter simultanément toutes les portes logique du rang, l'exécution d'une porte logique comprenant des étapes de sélection d'une ligne de la table de vérité associée à la porte logique, en fonction des valeurs brouillées d'entrée de la porte logique, et de déchiffrement de la ligne sélectionnée pour obtenir une valeur brouillée de sortie de la porte logique, et transférer les valeurs brouillées de sortie obtenues, à appliquer à une entrée de porte logique appartenant à un rang supérieur, d'une zone mémoire de sortie vers une zone mémoire d'entrée, de manière à être prises en compte lors de l'exécution du rang de portes logiques supérieur.

Selon un mode de réalisation, l'exécution du circuit brouillé est réalisée par un interpréteur réalisé lui-même au moins en partie sous la forme d'un circuit brouillé.

Selon un mode de réalisation, la donnée secrète ou aléatoire est générée à l'aide d'un circuit brouillé comprenant un premier rang de portes logiques associées à des tables de vérité présentant des lignes identiques mais ordonnées différemment, de manière à fournir des données de sortie différentes pour de mêmes données d'entrée, les données de sortie du premier rang de portes logiques étant fournies à un rang de portes logiques suivant en fonction d'un ordre dans lequel elles sont fournies par le premier rang de portes logiques.

Selon un mode de réalisation, la donnée secrète ou aléatoire est générée en lançant simultanément l'exécution de plusieurs opérations identiques s'exécutant en parallèle, la donnée aléatoire dépendant de l'ordre dans lequel se terminent les opérations.

Selon un mode de réalisation, le processeur sécurisé est un serveur auquel le terminal est connecté.

Selon un mode de réalisation, le processeur sécurisé est inséré dans le terminal.

Des modes de réalisation peuvent également concerner un terminal configuré pour : exécuter un programme impénétrable, configurant le terminal pour afficher sur un écran d'affichage du terminal une image présentant des zones à sélectionner associées chacune à un libellé ou une icône et ayant une répartition dans l'image définie par une donnée aléatoire, l'image comprenant des trames non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur, recueillir des positions de l'écran d'affichage désignées par l'utilisateur au moyen d'un organe de commande du terminal, en relation avec l'image affichée, et transmettre à un processeur sécurisé les positions désignées par l'utilisateur, l'utilisateur étant authentifié par le processeur sécurisé si les positions désignées correspondent à une donnée d'authentification de l'utilisateur, connue du processeur sécurisé.

Des modes de réalisation peuvent également concerner un terminal configuré pour : exécuter un programme impénétrable, configurant le terminal pour : générer une donnée secrète, chiffrer la donnée secrète, et transmettre la donnée secrète chiffrée à un processeur sécurisé.

Des modes de réalisation peuvent également concerner un terminal configuré pour mettre en œuvre l'un ou l'autre des procédés définis précédemment.

Des modes de réalisation peuvent également concerner un serveur configuré pour mettre en œuvre l'un ou l'autre des procédés définis précédemment.

Des modes de réalisation peuvent également concerner un programme d'ordinateur qui, lorsqu'il est chargé et exécuté par un terminal, configure le terminal pour mettre en œuvre l'un ou l'autre des procédés définis précédemment.

Des modes de réalisation peuvent également concerner un procédé de partage d'une donnée secrète, comprenant des étapes consistant à : générer dans un processeur graphique d'un terminal une donnée secrète, chiffrer la donnée secrète, et transmettre la donnée secrète chiffrée à un processeur sécurisé, les étapes de génération et de chiffrement de la donnée secrète étant réalisées par un circuit brouillé exécuté par le processeur graphique et comprenant des portes logiques réparties en plusieurs rangs ordonnés, comprenant un premier rang rassemblant des portes logiques recevant exclusivement des valeurs d'entrée du circuit brouillé, les portes logiques d'un certain rang recevant exclusivement des valeurs issues de portes logiques appartenant à des rangs inférieurs ou des valeurs d'entrée du circuit brouillé, chaque porte logique étant associée à des valeurs brouillées représentant chaque valeur binaire possible de chaque bit d'entrée et de chaque bit de sortie de la porte logique, chaque porte logique étant associée à une table de vérité comprenant pour chaque combinaison possible des valeurs binaires d'entrée de la porte logique une valeur obtenue par chiffrement de la valeur brouillée représentant la valeur de sortie de la porte logique correspondant à la combinaison des valeurs binaires d'entrée de la porte logique, l'exécution du circuit brouillé par le processeur graphique comprenant des étapes consistant à : exécuter successivement les rangs de portes logiques en respectant l'ordre des rangs, l'exécution de chacun des rangs de portes logiques consistant à exécuter simultanément toutes les portes logique du rang, l'exécution d'une porte logique comprenant des étapes de sélection d'une ligne de la table de vérité associée à la porte logique, en fonction des valeurs brouillées d'entrée de la porte logique, et de déchiffrement de la ligne sélectionnée pour obtenir une valeur brouillée de sortie de la porte logique, et transférer les valeurs brouillées de sortie obtenues, qui sont appliquées à une entrée d'une porte logique appartenant à un rang supérieur, d'une mémoire de sortie du processeur graphique vers une mémoire d'entrée du processeur graphique, de manière à être prises en compte lors de l'exécution du rang supérieur.

Selon un mode de réalisation, la donnée secrète est générée aléatoirement ou pseudo-aléatoirement, le circuit brouillé comprenant un circuit de génération de nombres aléatoires ou pseudo-aléatoire.

Selon un mode de réalisation, la donnée secrète est générée aléatoirement en lançant simultanément l'exécution de plusieurs opérations identiques s'exécutant en parallèle, la donnée secrète dépendant de l'ordre dans lequel se terminent les opérations.

Selon un mode de réalisation, la donnée secrète est générée à l'aide d'un circuit brouillé configuré pour générer des nombres aléatoires ou pseudo-aléatoires, le circuit brouillé comprenant un premier rang de portes associées à des tables de vérité présentant des lignes identiques mais ordonnées différemment, de manière à fournir des données de sortie différentes pour de mêmes données d'entrée, les données de sortie du rang de portes étant fournies à un rang de portes suivant en fonction d'un ordre dans lequel elles sont fournies par le premier rang de portes.

Selon un mode de réalisation, l'exécution du circuit brouillé est réalisée par un interpréteur réalisé lui-même au moins en partie sous la forme d'un circuit brouillé.

Selon un mode de réalisation, le procédé comprend une étape d'établissement d'une liaison entre le processeur graphique et le processeur sécurisé, la liaison étant sécurisée au moyen de la donnée secrète partagée uniquement entre le processeur graphique et le processeur sécurisé.

Des modes de réalisation concernent également un procédé d'authentification d'un utilisateur par un serveur, à partir d'un terminal connecté au serveur, le terminal comprenant un processeur principal, un processeur graphique contrôlant un écran d'affichage, et un organe de commande, le procédé comprenant des étapes consistant à : charger dans le processeur graphique un programme configurant le processeur graphique pour exécuter le procédé de partage tel que défini précédemment, afin de générer une donnée secrète partagée uniquement entre le processeur graphique et le serveur, et pour afficher à l'écran d'affichage une image d'un clavier ayant une répartition de touches définie et déterminable à l'aide de la donnée secrète partagée, exécuter le programme par le processeur graphique pour générer la donnée secrète partagée et afficher l'image du clavier à l'écran d'affichage, l'image du clavier étant affichée sous la forme de trames complémentaires non intelligibles individuellement pour un utilisateur, générées par un algorithme de cryptographie visuelle et affichées successivement à une cadence adaptée pour exploiter la rémanence du système visuel de l'utilisateur afin qu'une image combinant les trames complémentaires apparaisse d'une manière intelligible pour l'utilisateur, recueillir par le processeur principal des positions de l'écran d'affichage désignées par l'utilisateur au moyen de l'organe de commande, en relation avec le clavier virtuel affiché, transmettre par le processeur principal au serveur les positions désignées par l'utilisateur, et vérifier une cohérence entre les positions désignées, et un code secret d'authentification de l'utilisateur, connu du serveur, l'utilisateur étant authentifié si la cohérence est vérifiée.

Selon un mode de réalisation, la donnée secrète partagée définit la répartition des touches de l'image du clavier.

Selon un mode de réalisation, l'affichage de l'image du clavier comprend : des étapes successives de sélection d'une décomposition en motifs de pixels complémentaires pour chaque pixel ou groupe de pixels de l'image du clavier, représentant des libellés de touches du clavier, des étapes successives de génération de motifs de pixels complémentaires pour chaque décomposition sélectionnée, de manière à ce que les libellés des touches ne soient visibles à l'écran d'affichage que si les motifs de pixels complémentaires sont superposés, et des étapes successives d'affichage des motifs de pixels générés à des instants sélectionnés aléatoirement, espacés d'une durée variable telle que le système visuel humain puisse les combiner bien qu'ils soient affichés successivement, les instants d'affichage des motifs de pixels formant une image affichée du clavier étant distincts et indépendants les uns des autres.

Selon un mode de réalisation, l'affichage de l'image du clavier est effectué par un circuit brouillé exécuté par le processeur graphique.

Des modes de réalisation concernent également un terminal configuré pour mettre en œ uvre l'un ou l'autre des procédés définis précédemment.

Des modes de réalisation concernent également un programme d'ordinateur qui, lorsqu'il est chargé et exécuté par un terminal comprenant un processeur principal et un processeur graphique, configure le terminal pour mettre en œuvre l'un ou l'autre des procédés définis précédemment.
la figure 1 représente schématiquement un terminal classique en communication avec un serveur de transaction,
la figure 2 représente schématiquement un processeur graphique classique,
la figure 3 représente schématiquement une architecture fonctionnelle d'un programme chargé dans le processeur graphique, selon un mode de réalisation,
la figure 4 représente schématiquement un module du programme chargé dans le processeur graphique, selon un mode de réalisation,
la figure 5 représente schématiquement un module d'affichage cryptographique du programme chargé dans le processeur graphique, selon un mode de réalisation,
la figure 6A représente un exemple d'image produite par le module d'affichage cryptographique, telle que pouvant être visualisée par un utilisateur,
la figure 6B représente un exemple d'image produite et affichée par le module d'affichage cryptographique, à un instant donné,
la figure 7 représente schématiquement des motifs de pixels d'image affichés successivement sur un écran d'affichage par le module d'affichage cryptographique, selon un mode de réalisation,
la figure 8 représente schématiquement sur une échelle temporelle des instants d'affichage et de rafraîchissement de motifs de pixels générés par le module d'affichage cryptographique,
la figure 9 représente schématiquement un module de chiffrement du programme chargé dans le processeur graphique, selon un mode de réalisation,
la figure 10 représente des étapes exécutées par le terminal et le serveur de transaction, selon un mode de réalisation.

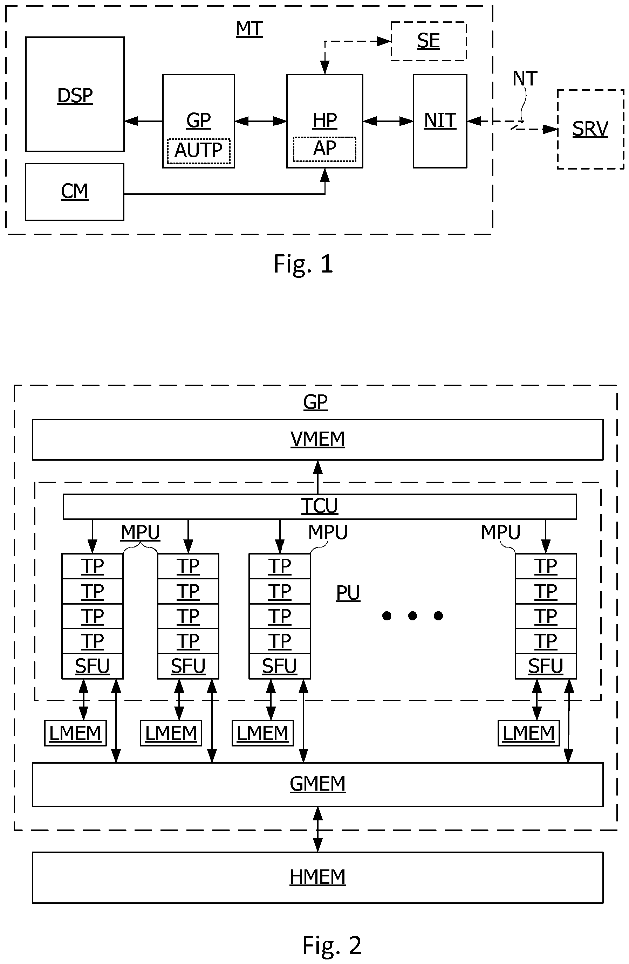

La figure 1 représente un terminal MT classique, susceptible de communiquer avec un serveur SRV par l'intermédiaire d'un réseau de transmission de données tel que le réseau Internet. Le serveur SRV peut être configuré pour conduire des transactions avec des terminaux auxquels il peut être connecté.

Le terminal MT est équipé de circuits de connexion avec un réseau tel que le réseau Internet. Le terminal MT est par exemple du type téléphone mobile notamment du type intelligent ou PDA (assistant personnel) ou tout autre type de dispositif, comme un ordinateur personnel équipé de circuits de connexion à un réseau tel que le réseau Internet. Le terminal MT comprend également un processeur principal HP, des circuits NIT de connexion à un réseau NT, connectés au processeur HP, un écran d'affichage DSP, un processeur graphique GP assurant la gestion de l'écran DSP, connecté au processeur HP, et un organe de commande CM connecté au processeur HP. L'organe de commande peut comprendre un clavier ou une surface tactile, par exemple une surface tactile transparente disposée sur l'écran DSP, et éventuellement un dispositif de pointage tel qu'une souris. Le processeur HP peut être le processeur principal du terminal ("Base band processor").

Le terminal peut comprendre également un processeur sécurisé SE qui peut être implanté dans une carte à circuit intégré UICC ("Universal Integrated Circuit Card"). Le processeur SE peut être par exemple de type carte SIM ("Subscriber Identity Module"), ou mini-SIM ou micro-SIM, permettant l'accès à un réseau de téléphonie mobile. Le processeur sécurisé peut comprendre un circuit NFC ("Near Field Communication") pour pouvoir communiquer avec une borne sans contact. Le circuit NFC peut être implanté dans une carte SIM (SIM-NFC) ou UICC, ou dans un circuit SoC ("System on Chip") ou dans une carte mémoire externe, par exemple de type "SD card". Les circuits NIT peuvent comprendre des circuits de radiotéléphonie donnant accès à un réseau de téléphonie mobile, et au réseau Internet par l'intermédiaire du réseau de téléphonie mobile, et/ou un circuit de connexion à un réseau sans fil (WiFi, Bluetooth), et/ou tout autre moyen de connexion avec ou sans fil à un réseau de transmission de données tel que le réseau Internet.

Le serveur SRV est configuré pour offrir des services de transaction à des utilisateurs. Il peut comprendre un dispositif de sécurité, un programme de gestion de services de transaction, et une zone mémoire dédiée au stockage de programme et de données de transaction. Le dispositif de sécurité protège le serveur et notamment l'accès à la zone mémoire dédiée aux données de transaction et au programme de gestion de services de transaction.

Dans ce qui suit, le terme "transaction" désigne généralement l'accès par un utilisateur à un service ou à des données, par l'intermédiaire d'une liaison, cet accès nécessitant une authentification de l'utilisateur.

La figure 2 représente un exemple de processeur graphique GP. Sur la figure 2, le processeur GP présente une architecture parallèle comprenant plusieurs unités de traitement multiples MPU. Chaque unité de traitement MPU comprend plusieurs processeurs de fil (thread processor) TP et une unité de fonctions spéciales SFU. Les unités SFU sont configurées pour exécuter des opérations peu fréquentes et coûteuses en ressources de calcul, telles que la division, la racine carrée, etc. Les processeurs TP d'une même unité MPU peuvent communiquer entre eux par l'intermédiaire d'une mémoire locale LMEM propre à l'unité MPU. En revanche, des processeurs TP appartenant à différentes unités MPU ne peuvent pas communiquer entre eux ou se synchroniser. Les processeurs TP d'une unité MPU n'ont donc pas accès aux mémoires locales LMEM des autres unités MPU du processeur GP.

Les unités MPU sont gérées par une unité de contrôle de d'exécution de fil (Thread Execution Control Unit) TPU. Le processeur GP comprend également une mémoire vidéo VMEM et une mémoire principale GMEM qui n'est pas accessible directement de l'extérieur du processeur GP. Réciproquement, la mémoire HMEM du processeur HP n'est pas directement accessible par le processeur GP. Les transferts de données entre les mémoires GMEM et HMEM sont cependant possibles par l'intermédiaire d'un port d'entrée / sortie du processeur GP et d'une procédure de type DMA (Direct Memory Access).

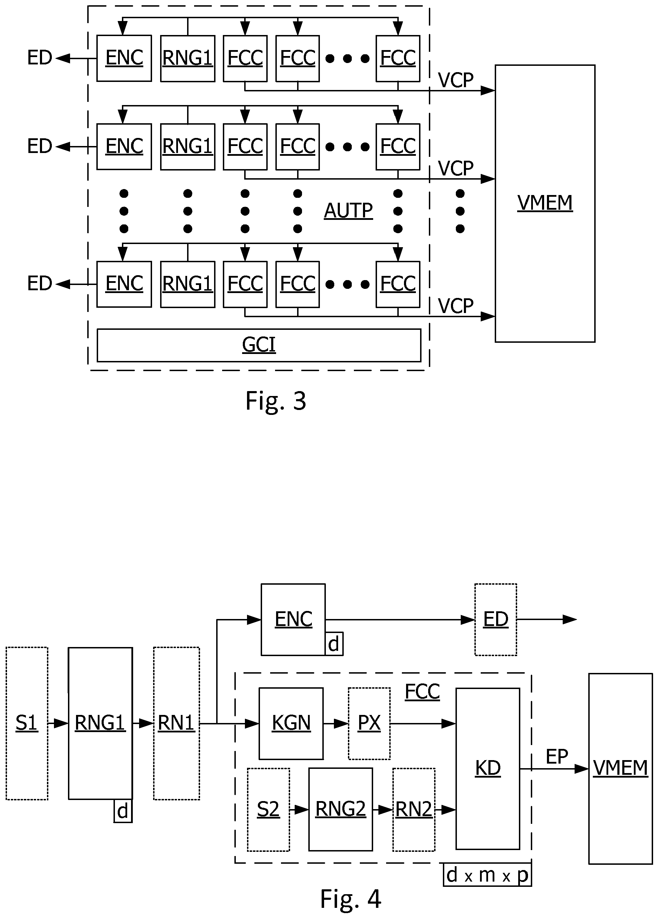

La figure 3 représente l'architecture fonctionnelle d'un programme AUTP chargé dans l'unité de traitement PU du processeur graphique GP et exécuté par ce dernier, lors l'exécution d'une application de transaction AP (figure 1) par le processeur principal HP du terminal MT. Selon un mode de réalisation, ce programme comprend une multiplicité de modules d'affichage FCC exécutés en parallèle, chaque module d'affichage FCC étant chargé de l'écriture et du rafraichissement dans la mémoire vidéo d'un motif de pixels VCP à afficher à l'écran d'affichage DSP. Le programme chargé dans le processeur graphique GP comprend également des modules de chiffrement ENC et des modules de génération de nombres aléatoires RNG1 fournissant des nombres aléatoires aux modules d'affichage FCC et aux modules de chiffrement ENC. Les modules de chiffrement ENC fournissent à l'extérieur du processeur GP des nombres chiffrés correspondant aux nombres aléatoires fournis par les modules RNG1.

La figure 4 représente l'un des modules d'affichage FCC du programme AUTP chargé dans le processeur graphique GP, selon un mode de réalisation. Le module FCC comprend un module de génération de pixels d'une image d'un clavier KGN, et un module de cryptographie visuelle KD. L'un des modules de génération de nombres aléatoires RNG1 reçoit en entrée un nombre D1 utilisé en tant que graine ("seed"). Le module RNG1 fournit un nombre aléatoire ou pseudo-aléatoire RN1 à m x p modules FCC. Le nombre aléatoire RN1 qui est fourni en entrée de module KGN spécifie un caractère tel qu'un caractère numérique ou alphanumérique, ou une icône d'une image, d'un clavier à afficher. Le module KGN fournit la valeur d'un pixel PX, noir ou blanc, d'une image formant le caractère correspondant au nombre RN1. Le nombre aléatoire RN2 est fourni en entrée du module KD. Le module KD fournit successivement des motifs de pixels PT à afficher en fonction du pixel PX fourni par le module KGN.

Tous les modules KGN chargés dans le processeur GP permettent ainsi de générer ensemble dans la mémoire vidéo VMEM une image complète d'un clavier formée de d images de touches de clavier juxtaposées, chaque image de touche comportant l'image d'un caractère différent associé à la touche. Ainsi, l'ensemble des modules KGN chargés dans le processeur GP comprend un groupe de m x p modules KGN par touche du clavier à afficher, chacun de ces groupes de modules KGN produisant une image de m x p pixels représentant une touche avec le caractère associé à la touche. Chacun de ces d groupes de m x p modules KGN reçoit du module RNG1 un nombre distinct correspondant à l'image du caractère à afficher sur la touche.

Selon un mode de réalisation, un premier des d groupes de modules KGN chargés d'afficher l'image d'une touche, reçoit du module RNG1 correspondant un nombre RN11 choisi aléatoirement entre 1 et le nombre d de touches du clavier à afficher. Un second des groupes chargés d'afficher l'image d'une touche reçoit en entrée un nombre RN12 choisi aléatoirement entre 1 et le nombre de touches du clavier à afficher, diminué de 1, d-1, le nombre RN12 correspondant alors à un rang de caractère parmi les caractères restant à attribuer aux touches restantes. Les nombres RN1i sont ainsi choisis aléatoirement en fonction du nombre de caractères restant à affecter à une touche, jusqu'à l'avant dernier caractère à affecter à une touche du clavier. Le dernier caractère à affecter à une touche est affecté à la touche restante.

Le module KGN peut également recevoir la position du pixel généré par le module KGN dans l'image affichée par l'écran DSP. Cependant, la position PXPi peut ne pas être nécessaire, la position du module FCCi dans l'unité de traitement PU pouvant définir cette position.

Le module KD applique une transformation de type cryptographie visuelle au pixel PXi, en fonction d'un nombre aléatoire ou pseudo-aléatoire RN2. Une telle transformation est par exemple décrite dans les documents "Visual Cryptography", Moni Naor, Adi Shamir, Eurocrypt 94, et "Construction and Bounds for Visual Cryptography", G. Ateniese, C Blundo, A. De Santis, G. G. Stinson. Cette transformation consiste à décomposer une image d'origine, par exemple intelligible humainement, en un ensemble de plusieurs trames complémentaires, de telle manière que l'image d'origine ne puisse être restituée qu'en superposant toutes les trames de l'ensemble de trames complémentaires, et qu'il soit très difficile de reconstituer l'image d'origine en l'absence de l'une quelconque des trames complémentaires. Ainsi, le module KD génère pour chaque trame à afficher à l'écran DSP un motif d'un ou plusieurs pixels EPi correspondant à une forme cryptée du pixel PXi. Ainsi, la valeur du pixel PXi peut apparaître à l'écran DSP en affichant successivement les motifs complémentaires EPi du pixel PXi, avec une fréquence d'affichage de trame adéquate pour exploiter la rémanence rétinienne du système visuel de l'utilisateur.

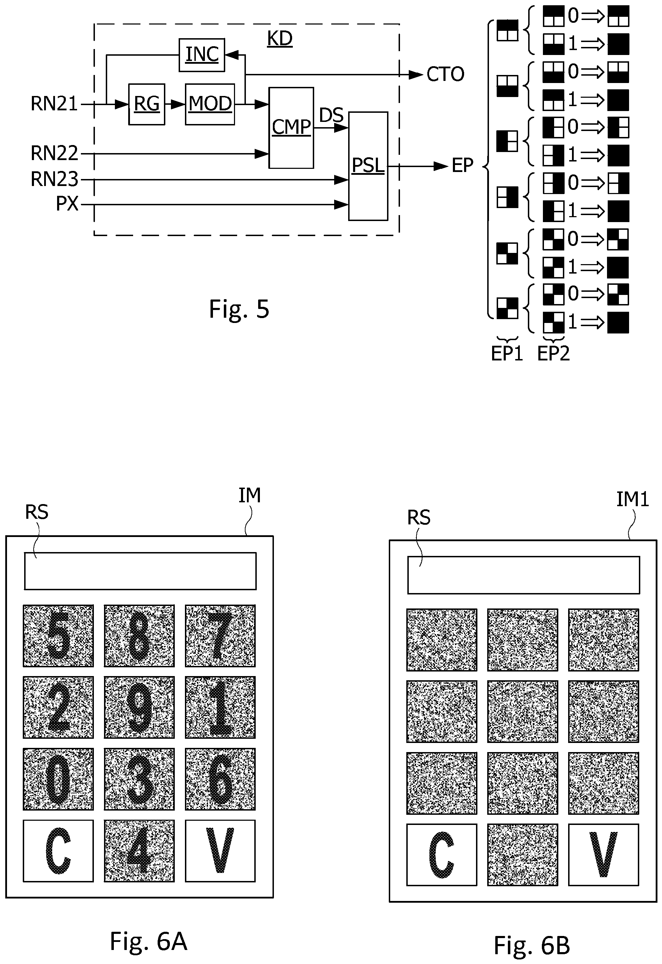

Selon un mode de réalisation, les motifs de pixels complémentaires EPi sont affichés séparément à des instants définis aléatoirement dans une limite compatible avec le système visuel humain. La figure 5 représente le module KD selon un mode de réalisation. Le module KD comprend un module PSL de génération de motifs de pixels, et un circuit de comptage comprenant un registre RG, un module de calcul de modulo MOD, un comparateur CMP et un module d'incrémentation INC. Le registre RG reçoit une partie RN21 du nombre aléatoire RN2, qui définit une valeur initiale du circuit de comptage. Le module MOD calcule le modulo du nombre dans le registre RG. Le module INC incrémente de un la valeur de sortie du module MOD et introduit la valeur incrémentée dans le registre RG. La valeur de sortie du module MOD est également fournie en sortie du module KD et en entrée du comparateur CMP. Le comparateur CMP compare la valeur de sortie du module MOD à une partie RN22 du nombre aléatoire RN2. Le comparateur CMP fournit au module PSL un signal de validation d'affichage DS qui est actif lorsque les deux valeurs d'entrée du comparateur CMP sont égales. Le module PSL sélectionne un motif de pixel parmi plusieurs motifs de pixel en fonction d'une partie RN23 du nombre aléatoire RN2. Lors d'une première activation du signal DS, le module PSL fournit en sortie du module KD en tant que premier pixel EP1 d'un ensemble de pixels complémentaires le motif de pixel sélectionné. Lors d'une seconde activation du signal DS, le module PSL fournit en sortie du module KD en tant que second pixel EP2 de l'ensemble de pixels complémentaires, soit le motif de pixel sélectionné, soit le motif de pixel complémentaire du motif de pixel sélectionné, en fonction de la valeur du pixel PX fourni en entrée du module KD. Par exemple, le second motif de pixel EP2 est le motif de pixel sélectionné si la valeur du pixel PX fourni en entrée du module KD est à zéro, ou le motif de pixel complémentaire du motif de pixel sélectionné, si la valeur du pixel PX est à un. Bien entendu, un choix inverse peut être effectué en fonction de la valeur du pixel PX. Ainsi, grâce au circuit de comptage, l'instant de fourniture en sortie du module KD d'un premier motif de pixel est choisi aléatoirement grâce au nombre aléatoire RN21. L'instant de fourniture des motifs de pixels suivants sont également choisis aléatoirement en fonction du nombre aléatoire RN22 qui peut changer à chaque fois qu'un motif de pixel EP1, EP2 est fourni en sortie du module KD. La valeur du modulo utilisé par le module MOD est choisie de manière à ce que les instants d'affichage des motifs de pixel EP1, EP2 soient espacés d'une durée compatible avec le système visuel humain, c'est-à-dire une durée telle que le système visuel humain puisse combiner les motifs de pixels complémentaires. A cet effet, cette durée peut varier entre 50 à 80 ms. Le premier motif de pixel EP1 est également choisi aléatoirement à chaque fois que deux motifs de pixels ont été fournis en sortie du module KD.

Dans l'exemple de la figure 5, les motifs de pixel comportent quatre pixels dont deux pixels noirs et deux pixels blancs. La sélection du premier motif de pixel EP1 est effectuée parmi 6 motifs, à savoir deux motifs horizontaux, deux motifs verticaux et deux motifs diagonaux. Bien entendu, il peut être envisagé d'autres motifs et d'autres combinaisons de motifs complémentaires pour former un pixel noir ou blanc (gris) dans le système de vision de l'utilisateur.

L'ensemble des modules FCC permet de générer et d'afficher une image telle que celle présentée sur la figure 6A, comportant des zones affichées en cryptographie visuelle et des zones affichées en clair. Ainsi, dans l'exemple de la figure 6A, l'image IM telle que perceptible par un utilisateur est celle d'un clavier comportant douze touches, comprenant des touches portant un numéro de "0" à "9", une touche d'annulation "C" et une touche de validation "V". Ainsi, dans l'exemple de l'image de la figure 6A, le programme AUTP comporte dix modules RNG1 et 10 x m x p modules FCC (d = 10). L'image affichée comporte également une zone d'affichage RS de données de transaction et/ou d'un caractère générique tel que "*" à chaque touche actionnée par l'utilisateur. Les touches portant un numéro de "0" à "9", sont présentées dans un ordre quelconque et sont affichées en cryptographie visuelle, en affichant successivement des motifs de pixel EP1, EP2 à des instants choisis aléatoirement. La figure 6B présente une image IM1 réellement produite et affichée par le module PSL. L'image IM1 ne comporte que l'un des deux motifs de pixels EP1, EP2 d'un des ensembles de motifs de pixels complémentaires générés pour chaque pixel PX des zones affichées en cryptographie visuelle de l'image produite par le module KGN. Les libellés des touches portant un numéro de "0" à "9" ne sont donc pas visibles dans l'image IM1. A noter que les touches de validation et d'annulation peuvent également avoir une position définie aléatoirement dans l'image.

Selon un mode de réalisation, les modules KGN sont exécutés une fois pour générer l'image d'un clavier avec une répartition de touches définie, et les modules RNG2 et KD sont exécutés plusieurs fois, à une cadence de l'ordre de une fois par période T, T étant de l'ordre de deux à une dizaine de millisecondes pour pouvoir déclencher la fourniture d'un motif de pixels VCP dans la mémoire VMEM toutes les 50 à 80 ms, par exemple jusqu'à ce que l'utilisateur active la touche d'annulation "C" ou de validation "V". La valeur du modulo appliqué par le module MOD dépend de la valeur de la période T et de la durée maximum entre les instants d'affichage successifs d'un motif de pixels. Selon un mode de réalisation, l'affichage du contenu de la mémoire VMEM est effectué à chacune des périodes T

Selon un mode de réalisation, les modules KGN sont exécutés à une certaine cadence, pour générer des images différentes, mais sans changer la répartition des touches de 0 à 9 dans l'image du clavier, de manière à rendre encore plus difficile la détermination par un attaquant de la répartition des touches de 0 à 9. Les images différentes ainsi générées peuvent par exemple changer la position du libellé (de "0" à "9") de chaque touche dans chaque zone délimitée pour une touche, et/ou la taille de ce libellé, et/ou la police de caractère utilisée pour présenter ce libellé.

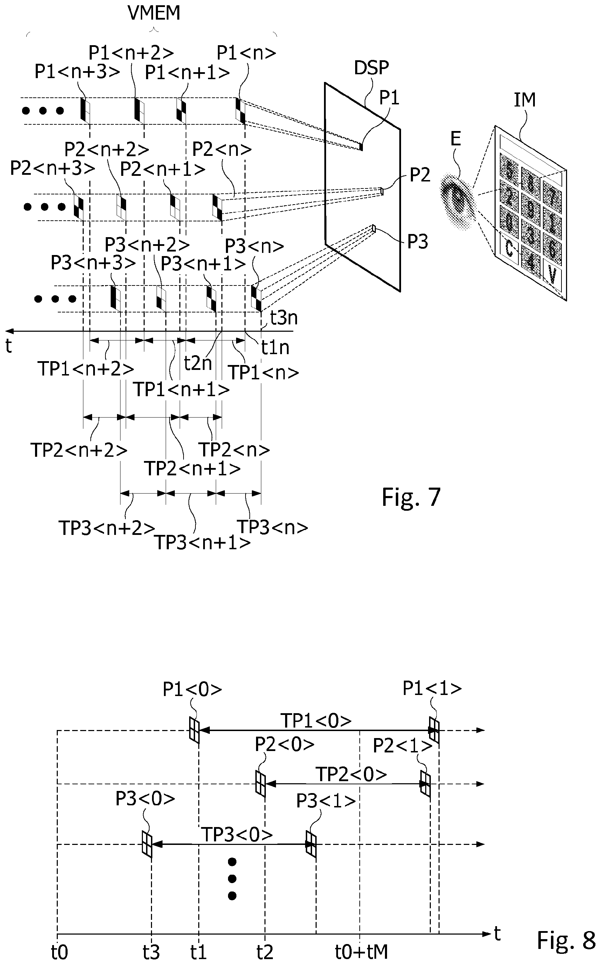

La figure 7 représente l'image IM visualisée par l'utilisateur à l'écran DSP du terminal. Selon un mode de réalisation, au moins une partie de l'image IM résulte du rafraichissement de motifs de pixels, à des fréquences différentes, les motifs pixels d'une première image étant affichés à des instants différents. La figure 7 représente des motifs de pixels P1<n>, P1<n+1>, P1<n+2>, P1<n+3> affichés successivement en une position P1 de l'écran d'affichage DSP, des motifs de pixels P2<n>, P2<n+1>, P2<n+2>, P2<n+3> affichés successivement en une position P2 de l'écran d'affichage, et des motifs de pixels P3<n>, P3<n+1>, P3<n+2>, P3<n+3> affichés successivement en une position P3 de l'écran d'affichage. Les motifs de pixels Pi<j> (j = n, n+1, n+2, n+3, ...) sont issus de décompositions successives différentes, par cryptographie visuelle, d'un pixel ou groupe de pixels en une position Pi d'une image d'origine, en ensembles de motifs de pixels complémentaires. Cette décomposition est réalisée par les modules KD des modules FCC, de telle manière que l'image d'origine ne puisse être restituée qu'en superposant tous les motifs de pixels d'un ensemble de motifs de pixels complémentaires, et qu'il soit très difficile de déterminer la valeur d'un pixel dans l'image d'origine en l'absence de l'un quelconque des motifs de pixels de l'ensemble de motifs de pixels complémentaires ou en présence d'un motif de pixels appartenant à un autre ensemble de motifs de pixels complémentaires.

Selon un mode de réalisation, chaque motif de pixels Pi<j> est affiché pendant une durée respective distincte TPi<j> (i = 1, 2, 3, ... et j = n, n+1, n+2, n+3, ...) déterminée de manière à ce que la rémanence rétinienne ou visuelle de l'utilisateur recombine les motifs de pixels de chaque ensemble de motifs de pixels complémentaires et donc, de manière à ce que l'utilisateur perçoive l'image d'origine IM constituée par la superposition de tous les motifs de pixels complémentaires formant cette image.

Par exemple, les motifs de pixels Pi<n> et Pi<n+1> (i = 1, 2, 3, ...) forment un premier ensemble de motifs de pixels complémentaires, issu d'une première décomposition par cryptographie visuelle, et Pi<n+2> et Pi<n+3> (i = 1, 2, 3, ...) forment un second ensemble de motifs de pixels complémentaires, issu d'une seconde décomposition par cryptographie visuelle, distincte de la première décomposition. Bien entendu, un pixel ou groupe de pixels d'une image d'origine peut être décomposé par cryptographie visuelle en plus de deux motifs de pixels complémentaires.

Les pixels ou groupes de pixels de l'image d'origine affichés sous la forme de motifs de pixels complémentaires sont répartis dans l'image de manière à rendre tout ou partie de l'image inintelligible si l'on ne superpose pas des motifs de pixels complémentaires. Ainsi, l'image IM de la figure 6 (telle qu'elle apparaît à l'utilisateur) présente un clavier numérique dont les touches sont disposées dans un ordre quelconque, par exemple déterminé aléatoirement. Selon un mode de réalisation, les pixels délimités par la forme des touches et représentant les libellés des touches sont décomposés en motifs de pixels complémentaires obtenus par cryptographie visuelle. Bien entendu, il peut être prévu de décomposer par cryptographie visuelle tous les pixels de l'image IM.

Selon un mode de réalisation, la durée d'affichage TPi<j> (i = 1, 2, 3, ... et j = n, n+1, n+2, n+3, ...) de chaque motif de pixel est fixée à une valeur qui varie dans le temps et d'un motif de pixels à l'autre, entre 50 et 80 ms. Selon un mode de réalisation, des premiers motifs de pixels affichés au début de la présentation d'une image à l'écran d'affichage DSP, sont affichés à des instants distincts. Ainsi, la figure 8 représente le long d'un axe temporel des instants d'affichage t1, t2, t3 de premiers motifs de pixels P1<0>, P2<0>, P3<0> affichés aux positions P1, P2, P3 de l'image d'origine IM. Les instants t1, t2, t3 sont séparés d'un instant t0 de début d'affichage de l'image, de moins d'une durée tM qui peut être choisie inférieure ou égale à 50 ms, sachant que certains motifs de pixels de l'image peuvent être affichés dès l'instant t0. Des seconds motifs de pixels P1<1>, P2<1>, P3<1> sont affichés après les premiers motifs de pixels P1<0>, P2<0>, P3<0> à des instants variables d'un motif de pixels à l'autre, séparés des instants d'affichage des premiers motifs de pixels de durées respectives TP1<0>, TP2<0>, TP3<0> comprises entre 50 et 80 ms.

Ainsi, si chaque pixel ou groupes de pixels de l'image d'origine est décomposé en deux motifs de pixels complémentaires successifs, et en admettant que deux copies d'écran successives puissent être réalisées et mémorisées par le processeur HP en 50 ms ou moins, la seconde copie d'écran ne peut pas contenir tous les motifs de pixels complémentaires des motifs de pixels se trouvant dans la première copie d'écran. En effet, comme les motifs de pixels sont affichés à partir d'instants distincts et sont rafraîchis selon des périodes de rafraîchissement variables différentes, la première copie d'écran contient nécessairement des motifs de pixels complémentaires de motifs de pixels précédemment affichés, et donc la seconde copie d'écran contient nécessairement des motifs de pixels complémentaires de motifs pixels qui seront affichés après seconde la copie d'écran. Une troisième copie d'écran peut être effectuée pour obtenir ces motifs de pixels complémentaires. Cependant, il n'est pas possible de déterminer si un pixel de l'image d'origine, par exemple P1, est reconstitué à partir du motif de pixels correspondant des premières et secondes copies d'écran (P1<n>, P1<n+1>) ou celui des secondes et troisièmes copies d'écran (P1<n+1>, P1<n+2>). Si tous les pixels de l'image d'origine sont ainsi décomposés en deux motifs de pixels complémentaires, la reconstitution de l'image d'origine nécessite de sélectionner, pour chaque motif de pixel de l'image transformée par cryptographie visuelle, la bonne paire de motifs de pixels complémentaires parmi la paire comprenant les motifs de pixels correspondants dans les première et seconde copies d'écran et la paire comprenant les motifs de pixels correspondants dans les seconde et troisième copies d'écran. Dans ce cas, il faut que le processeur HP soit capable d'effectuer et de mémoriser au moins trois copies d'écran successives à moins de 50 ms d'intervalle, chaque copie d'écran nécessitant de lire la mémoire vidéo VMEM et d'écrire les données lues dans une mémoire HMEM accessible au processeur HP.

Si chaque pixel de l'image d'origine est transformé par cryptographie visuelle en un ensemble de trois ou davantage de motifs de pixels complémentaires, le problème de reconstituer l'image d'origine à partir de copies d'écran successives est encore plus complexe.

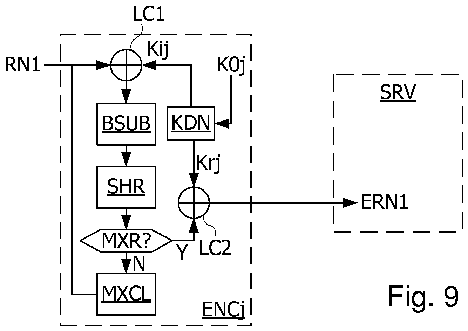

La figure 9 représente l'un des modules de chiffrement ENCj installés dans le processeur GP, selon un mode de réalisation. Le module ENCj reçoit un nombre aléatoire RN1 transmis par l'un des modules RNG1 et le chiffre en lui appliquant un algorithme de chiffrement pour calculer une signature ERN1. Toutes les signatures ERN1 ainsi calculées par les modules ENCj sont transmises en dehors du processeur GP, par exemple à destination du serveur SRV.

Dans l'exemple de la figure 9, le module ENCj met en œuvre l'algorithme AES (Advanced Encryption Standard). Ainsi, le module ENC exécute plusieurs (r+1) rondes de chiffrement. A la première ronde, le module ENCj combine par une fonction LC1 réalisant une opération OU Exclusif (XOR), bit à bit, une partie de clé initiale K0j avec le nombre aléatoire RN1 qu'il a reçu du module RNG1. Le résultat de cette combinaison est transmis à une fonction de substitution non linéaire BSUB remplaçant chaque octet de la combinaison par un autre conformément à une table de correspondance. Le résultat de la substitution est transmis à une fonction de transposition SHR consistant à décaler de manière cyclique un certain nombre de fois les trois dernières lignes du résultat de substitution disposé sous la forme d'un bloc de plusieurs lignes et plusieurs colonnes. Le résultat de la transposition est transmis à une fonction de mélange MXCL. La fonction MXCL est appliquée par colonne au bloc issu de la transposition et combine les quatre derniers octets de chaque colonne du bloc. Le résultat du mélange est combiné à une nouvelle clé K1j dérivée de la clé initiale par une fonction LC2 réalisant également une opération OU Exclusif (XOR), bit à bit. Ces fonctions BSUB, SHR, MXCL sont exécutées à chaque ronde i avec une nouvelle clé Kij dérivée de la clé utilisée à la ronde précédente par une fonction de dérivation de clé KDN. A la dernière ronde r, lorsqu'un nombre maximum de rondes MXR est atteint, la fonction MXCL n'est pas exécutée, le résultat de la fonction de transposition SHR étant combiné à une dernière clé Krj dérivée de la clé utilisée à la ronde précédente.

Il peut être observé que si la fonction de chiffrement mise en œuvre par chaque module ENCj est réversible, comme c'est le cas de l'algorithme AES, les modules ENCj peuvent être utilisés pour établir un canal de transmission entre le serveur SRV et le processeur GP, qui est sécurisé par un chiffrement symétrique à l'aide d'une clé secrète connue seulement du serveur SRV. Ici et dans ce qui suit, le terme "sécurisé" signifie protégé contre des accès frauduleux par des éléments matériels et/ou logiciels.

Selon un mode de réalisation, les modules RNG1, ENC et FCC sont réalisés sous la forme de circuits ou de code exécutable impénétrable ("obfuscated"), de manière à ce que leur fonctionnement soit totalement masqué et ne soit pas modifiable. Les modules RNG1, ENC et FCC peuvent être générés par le serveur SRV de manière à intégrer dans leur structure interne une clé secrète respective spécifique d'un identifiant de l'utilisateur.

Selon un mode de réalisation, les modules RNG1, ENC et FCC sont réalisés sous la forme de circuits logiques constitués de portes logiques telles que AND, NAND, OR, NOR, XOR, puis transformés par la technique des circuits brouillés ("garbled circuits"). La transformation des modules RNG1 et FCC en circuits logiques peut être effectuée à l'aide d'outils de conversion de programmes écrits par exemple en langage C ou C++, en langages tels que VHDL ou Verilog. Cette technique de transformation en circuit brouillé consiste à générer aléatoirement des valeurs brouillées représentant chaque valeur binaire 0 et 1 de chaque bit d'entrée du circuit et de chaque bit de sortie de porte logique du circuit, certaines sorties de porte logique correspondant à des sorties du circuit, à représenter chaque porte par sa table de vérité, et à chiffrer chaque table de vérité, en chiffrant la valeur brouillée représentant la valeur binaire de sortie de chaque ligne de la table de vérité, en utilisant comme clés, les valeurs brouillées d'entrée de la porte logique correspondant à la ligne de la table de vérité. Un bit de rang déterminé de chaque valeur brouillée, par exemple le bit de poids faible (LSB), peut être utilisé pour déterminer la correspondance entre une valeur brouillée et sa valeur binaire 0 ou 1 correspondante. Ainsi, ce bit déterminé peut être utilisé pour sélectionner dans la table de vérité d'une porte logique la valeur brouillée chiffrée de sortie correspondant aux valeurs brouillées d'entrée de la porte logique. La valeur brouillée de sortie de chaque porte peut donc être obtenu en appliquant un algorithme de déchiffrement correspondant à l'algorithme de chiffrement utilisé, à la valeur brouillée chiffrée de sortie ainsi sélectionnée en utilisant comme clés les valeurs brouillées appliquées en entrée de la porte logique. La topologie du circuit (connexions entre les entrées du circuit, les sorties de porte logique et les entrées de porte logique) peut être définie dans une table.

De cette manière, il n'est pas possible de déterminer le fonctionnement des modules RNG1, ENC et FCC une fois transformés en circuits brouillés, et les circuits ne fonctionnent qu'avec certaines valeurs d'entrée parmi un grand nombre de valeurs possibles. Pour plus de détails sur la technique de transformation en circuit brouillé, on peut se référer par exemple au document "Foundations of Garbled Circuits", Mihir Bellare, Viet Tung Hoang, Phillip Rogaway.

Ces techniques de génération et d'exécution de circuits brouillés peuvent être aisément adaptées à une mise en œuvre par un processeur présentant une architecture SIMD (Simple Instruction Multiple Data), tel que les processeurs graphiques. A cet effet, les portes logiques du circuit brouillé sont réparties en rangs, les portes logiques de premier rang étant celles recevant exclusivement des valeurs d'entrée du circuit brouillé, et les portes logiques d'un certain rang n, recevant exclusivement des valeurs issues de portes logiques de rang inférieur ou des valeurs d'entrée du circuit brouillé.

Selon un mode de réalisation, les valeurs brouillées sont définies sur 4 pixels de 4 octets, soit 16 octets. Les tables de vérités des portes logiques sont donc définies par quatre valeurs brouillées, soit 64 octets correspondant à chaque combinaison (0, 0), (0, 1), (1, 0), (1, 1) des valeurs binaires d'entrée. La topologie du circuit brouillé peut être définie à partir d'une numérotation de chaque connexion du circuit, comprenant les entrées du circuit, de 1 à n, puis chaque sortie de porte logique du circuit, de n+1 à n+q, les sorties du circuit étant associées aux numéros les plus élevés, de n+qm+1 à n+q, et les portes logiques étant référencées par le numéro de leur connexion de sortie, de n+1 à n+q. La topologie du circuit brouillé peut ainsi être mémorisée sous la forme d'une table rassemblant pour chaque porte logique du circuit les numéros des connexions d'entrée de la porte logique.

L'exécution du circuit brouillé par le processeur GP peut être effectuée par un module interpréteur de circuit brouillé GCI configuré pour fonctionner par itération, en exécutant à chaque itération les portes logiques d'un rang, en commençant par les portes logiques de premier rang. Avant l'exécution des portes logiques du premier rang, les tables de topologie, les tables de vérité des portes logiques et les valeurs brouillées d'entrée sont chargées dans une mémoire d'entrée du processeur GP, c'est-à-dire la mémoire GMEM. A chaque exécution des portes logiques appartenant à un rang, le module GCI est configuré pour transférer les valeurs brouillées obtenues à la suite de l'exécution des portes logiques du rang d'une mémoire de sortie du processeur GP, c'est-à-dire de la mémoire VMEM, dans la mémoire d'entrée GMEM, pour les fournir aux entrées des portes logiques du rang suivant à exécuter. Lors de ce transfert, seules les valeurs brouillées de sortie utilisées comme valeurs d'entrée des portes logiques du rang suivant sont transférées. A la fin de l'exécution du circuit brouillé, les valeurs brouillées de sortie se trouvent dans la mémoire VMEM, et peuvent être transférées au processeur HP.

De cette manière, le circuit de chiffrement ENC qui contient la clé de chiffrement, reste connu seulement de l'entité qui l'a généré, en l'occurrence le serveur SRV. Il est à noter que le processeur HP peut obtenir le contenu des mémoires VMEM et GMEM par l'intermédiaire de commandes de lecture transmises au processeur GP.

Le module RNG1 peut être réalisé en circuit brouillé par exemple par un circuit comprenant un premier rang de portes logiques obtenues en dupliquant un grand nombre de fois une porte logique brouillée et en intervertissant pour chaque table de porte logique du premier rang, les lignes de la table de vérité de cette porte logique, contenant les valeurs brouillées de la porte. Le module RNG1 peut comprendre un second ou davantage de rangs de portes logiques comprenant chacun des portes logiques obtenues également en dupliquant une autre porte logique brouillée ou la porte logique brouillée utilisée pour générer les portes logiques du niveau précédent, et en intervertissant pour chaque table de porte logique du premier rang, les lignes de la table de vérité de cette porte logique. Chaque porte logique du second rang et des éventuels rangs supérieurs combine des sorties de portes logique du rang inférieur. Selon un mode de réalisation, la source d'entropie du module RNG1 est obtenue en exploitant l'architecture parallèle du processeur GP qui exécute les portes logiques brouillées d'un même rang en parallèle. Dans une telle architecture, il n'est pas possible de déterminer à l'avance dans quel ordre seront fournies les valeurs brouillées de sortie des portes logiques brouillées du rang en cours d'exécution. Les valeurs brouillées de sortie des portes logiques en cours d'exécution sont injectées en entrée des portes logiques brouillées du rang suivant, dans l'ordre où elles sont obtenues. Ainsi, les valeurs brouillées obtenues en sortie du dernier rang de portes logiques présentent un certain caractère aléatoire.

Il est également possible de réaliser le module RNG1 comportant plusieurs rangs constitués à partir d'une même porte logique dupliquée, chaque porte logique dupliquée comportant une table de vérité dont les lignes peuvent être ordonnées différemment de la table d'une autre porte logique. Ainsi, les entrées du module RNG1 peuvent être utilisées en entrée de plusieurs des rangs de portes logiques du module RNG1.

Le module RNG1 peut être également réalisé sous la forme d'un circuit brouillé implémentant des compteurs, certains compteurs commandant l'arrêt d'autres compteurs. Les valeurs des compteurs ainsi arrêtés constituant une base de définition d'une valeur aléatoire.

Le module RNG1 peut également comprendre des rangs de portes logiques implémentant un algorithme de chiffrement tel que AES appliqué aux valeurs de sorties des portes logiques appartenant à des rangs inférieurs.

Le module RNG2 peut être réalisé sous une forme analogue à celle du module RNG1, en dupliquant une porte logique et en réordonnant les lignes des tables de vérité des portes logiques dupliquées. Le module RNG2 peut être également réalisé sous la forme d'un circuit brouillé configuré pour dériver des valeurs brouillées à partir des valeurs brouillées RN1. Dans ce cas, les valeurs RN1 sont également appliquées en entrée du module RNG2 à la place des valeurs S2, sur la figure 4.

Tout ou partie du module GCI peut également être réalisé sous la forme d'un circuit brouillé. Par exemple, la fonction du module GCI chargée de déchiffrer une ligne de la table de vérité de chaque porte logique du rang en cours d'exécution pour obtenir la valeur brouillée de sortie de la porte logique, peut être réalisée sous la forme d'un circuit brouillé, tel que décrit précédemment.

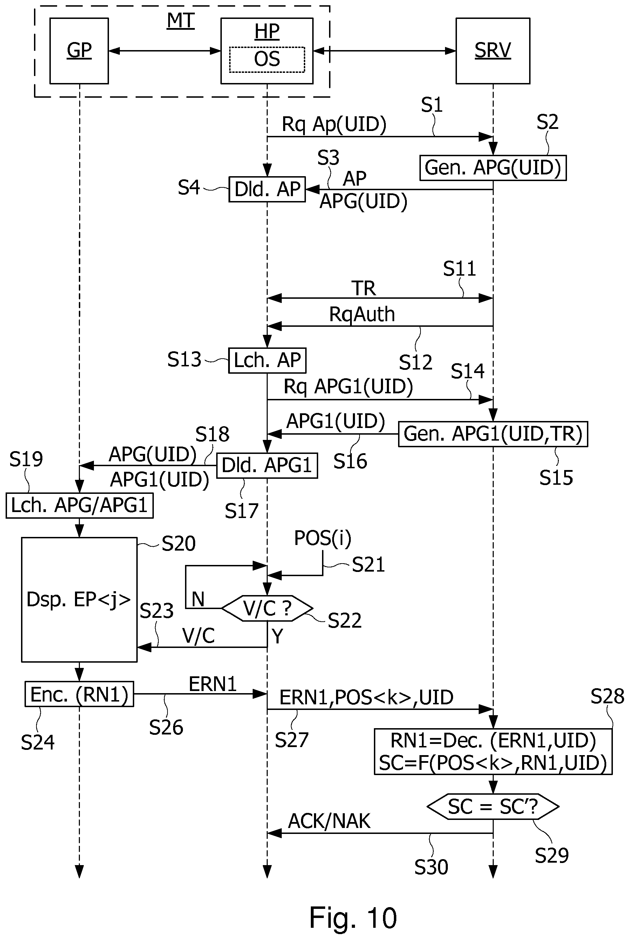

La figure 10 représente des étapes exécutées pour authentifier l'utilisateur du terminal, selon un mode de réalisation. Des étapes S1 à S4 sont prévues pour installer une application AP comportant une fonction d'authentification de l'utilisateur. A l'étape S1, le processeur HP du terminal MT transmet une requête Rq de téléchargement de l'application AP associée à un identifiant UID de l'utilisateur. A l'étape S2, le serveur SRV reçoit cette requête Rq et génère un programme APG à charger dans le processeur graphique GP du terminal MT. Le programme APG est généré au moins en partie sous la forme de code impénétrable à partir de données secrètes générées spécifiquement pour l'identifiant UID de l'utilisateur. A l'étape S3, le serveur SRV transmet au terminal MT, en réponse à la requête Rq, l'application AP et le programme APG à installer dans le processeur HP et dans le processeur GP. A l'étape S4, le processeur HP reçoit l'application AP et le programme APG et les stocke dans sa mémoire non volatile, puis installe l'application AP.

Des étapes S11 à S29 sont exécutées lors d'une transaction ou d'un accès à un service nécessitant une authentification de l'utilisateur. A l'étape S11, des traitements préliminaires à la conclusion d'une transaction sont réalisés par le processeur HP et le serveur SRV ou un autre serveur. A l'étape S12, le terminal MT reçoit une requête d'authentification de l'utilisateur Rqauth. A l'étape S13, le processeur HP du terminal MT lance l'exécution de l'application AP en réponse à la réception de la requête RqAuth. A noter que la conduite de la transaction ou de l'accès à un service peut être effectuée par l'application AP. Dans ce cas, l'application AP a été lancée avant l'étape S11. A l'étape S14, l'application AP exécutée par le processeur HP transmet au serveur une requête de programme APG1 pour le processeur graphique, cette requête contenant l'identifiant UID de l'utilisateur, et éventuellement des informations relatives à la transaction, devant être présentées à l'utilisateur sur l'écran DSP du terminal MT. A l'étape S15, le serveur SRV reçoit cette requête et génère un programme APG1 à charger dans le processeur graphique GP du terminal MT, en complément ou en remplacement de tout ou partie du programme APG. Ici encore, le programme APG1 est généré au moins en partie sous la forme de code impénétrable ou de circuits brouillés à partir de données secrètes générées spécifiquement pour l'identifiant UID de l'utilisateur. Le programme APG1 comprend des programmes formant des modules FCC qui peuvent être conçus pour afficher des données de transaction telles qu'un prix à payer et le destinataire du paiement. Certains modules FCC du programme APG1 peuvent également remplacer des modules d'affichage de touches de clavier figurant dans le programme APG, notamment pour afficher des libellés de touche différemment (positions, tailles et police de caractères des libellés).

A l'étape S16, le serveur SRV transmet le programme APG1 qu'il a généré pour l'identifiant d'utilisateur UID. A l'étape S17, le terminal MT reçoit le programme APG1 et le charge dans la mémoire volatile du terminal MT en complément ou en remplacement de tout ou partie du programme APG déjà stocké dans cette mémoire non volatile pour former un programme APG-APG1. A l'étape S18, le processeur HP transmet le programme APG-APG1 de la mémoire non volatile à la mémoire GMEM du processeur GP. A l'étape S19, le processeur GP charge et lance le programme APG-APG1. Durant les étapes S20 et S24, le processeur GP est contrôlé par le programme APG-APG1. A l'étape S20, le processeur GP déclenche l'affichage à l'écran DSP d'un clavier dont les touches sont situées à des positions choisies aléatoirement, en exécutant les modules RNG1, FCC précédemment décrits. Ainsi, l'affichage du clavier par le processeur GP est réalisé en appliquant un algorithme de cryptographie visuelle de manière à ce qu'une copie d'écran ne permette pas d'obtenir la configuration des touches du clavier, comme expliqué précédemment.

Durant l'exécution de l'étape S20 par le processeur GP, le processeur HP exécute les étapes S21 et S22. A l'étape S21, le processeur HP acquiert des positions POS(i) sur l'écran DSP, activées par l'utilisateur au moyen d'une souris ou de la surface tactile CM. A l'étape S22, si l'une des positions activées correspond à la position de la touche de validation "V" ou d'annulation "C", le processeur HP envoie à l'étape S23 au processeur GP un message de validation ou d'annulation, indiquant au processeur GP qu'il peut retirer l'image du clavier de l'image affichée à l'écran DSP. La réception de ce message par le processeur GP met fin à l'étape S20 d'affichage du clavier, et si le message reçu est un message de validation, le processeur GP exécute l'étape S24 où les modules ENC du programme APG-APG1 chiffrent les valeurs aléatoires brouillées RN1 générées par les modules RNG1, pour générer l'image du clavier à afficher. A l'étape S26, le processeur GP fournit les valeurs chiffrées ERN1 qu'il a calculées à l'étape S24, au processeur HP. A l'étape S27, le processeur HP transmet au serveur SRV les valeurs brouillées ERN1, les positions POS(i) introduites par l'utilisateur, ainsi que l'identifiant UID de l'utilisateur. A l'étape S28, le serveur SRV reçoit et vérifie ces informations, puis les traite pour les vérifier en déchiffrant les valeurs chiffrées ERN1. Le déchiffrement des valeurs chiffrées ERN1 est effectué par le serveur SRV en exécutant un circuit brouillé correspondant au module ENC, et en utilisant des clés Krj stockées en association avec l'identifiant UID de l'utilisateur. Cette opération de déchiffrement permet d'obtenir les valeurs aléatoires brouillées RN1. Le décodage des valeurs brouillées RN1 pour déterminer les valeurs binaires d'origine de ces valeurs permet de déterminer l'ordre des touches du clavier affiché. Le code secret SC introduit par l'utilisateur est déterminé à partir des positions saisies POS(i) et de l'ordre des touches du clavier affiché. A l'étape S29, le serveur SRV vérifie que le code secret SC ainsi introduit par l'utilisateur et obtenu correspond à un code secret SC' mémorisé en association avec l'identifiant UID de l'utilisateur. Si tel est le cas, le serveur SRV considère que l'utilisateur a été authentifié. Le serveur SRV peut alors valider une transaction ou en informer un éventuel serveur partie à la transaction. A l'étape S30, le serveur SRV informe le terminal MT de la réussite ou de l'échec de l'authentification de l'utilisateur. Le processeur HP peut alors afficher une notification informant l'utilisateur du succès ou de l'échec de la transaction.

Selon un mode de réalisation, le programme APG-APG1 est configuré pour occuper au moins à 80% les ressources de calcul du processeur GP. De cette manière, le fonctionnement du processeur GP sera perturbé si un autre programme est chargé pour être exécuté par une ou plusieurs unités TP ou SFU du processeur GP. Ainsi, on est assuré que l'image affichée à l'écran DSP n'est pas affichée par un autre programme exécuté par le processeur GP.

Selon un mode de réalisation, le caractère de chaque touche peut être affiché dans l'image de la touche avec une position, une taille et une police variables, définies dans le programme APG1 téléchargé à chaque transaction. Ainsi, le programme APG1 peut contenir la définition d'une seule ou de plusieurs des touches du clavier à afficher.

Les étapes S11 à S30 peuvent être mises en œuvre pour différentes applications, telles que l'accès à un service, la validation d'une opération de paiement en ligne, ou encore un service de vote électronique. Dans le cas d'un service de vote électronique, le programme APG1 fourni par le serveur SRV durant l'exécution de l'application AP peut comprendre des modules FCC permettant d'afficher les noms des candidats pour qui voter, associés chacun à une touche d'un clavier dont les touches sont réparties aléatoirement dans l'image affichée par le terminal MT. L'utilisateur doit par exemple sélectionner un candidat en activant une touche du clavier correspondant au candidat pour lequel il souhaite voter et saisir un code secret en activant un ensemble de touches, permettant au serveur SRV de l'authentifier.

Par ailleurs, le module RNG1 couplé au module de chiffrement ENC, réalisés sous la forme d'un programme impénétrable comme un circuit brouillé, peuvent être également mis en œuvre dans une application d'établissement d'un canal de communication sécurisé entre le processeur GP et un processeur sécurisé ou le serveur SRV, sur la base d'une donnée secrète (les valeurs aléatoires brouillées RN1) partagée seulement par le processeur GP et le serveur, et qui est non accessible en dehors du processeur GP et du serveur. Le canal de communication sécurisé peut être réalisé en utilisant un algorithme de chiffrement mis en œuvre par le processeur GP et le serveur SRV, en utilisant la donnée secrète comme clé de chiffrement ou pour dériver une même clé de chiffrement par le processeur GP et par le serveur SRV. Le programme APG, APG1 comporte alors un module de déchiffrement permettant de déchiffrer des données émises et chiffrées par le serveur SRV, à l'aide de la donnée secrète. Une procédure analogue à celle de la figure 10 peut être mise en œuvre, cette procédure comportant les étapes S11 à S28, mais ne comportant pas d'étape S20 d'affichage d'une image, ni d'étapes de détermination du code secret SC (S28) et de comparaison de ce code secret avec une valeur attendue (S29).

Les modules RNG1, ENC et FCC peuvent également être mis en œuvre pour générer et afficher un code à usage unique à l'écran DSP du terminal.

Il est à noter que les nombres aléatoires en entrée du module KGN pour générer l'image du clavier à afficher ou pour générer un code à usage unique à afficher peuvent être transmis par le serveur SRV au processeur GP en utilisant le canal de communication sécurisé tel que décrit précédemment.

Dans la description qui précède, en particulier de la figure 10, toutes les opérations décrites exécutées par le serveur SRV peuvent alternativement être exécutées par un processeur sécurisé inséré dans le terminal MT, tel que le processeur sécurisé SE précédemment décrit.

Il apparaîtra clairement à l'homme de l'art que la présente invention est susceptible de diverses variantes de réalisation et diverses applications. En particulier, l'invention n'est pas limitée à une réalisation sous la forme de circuits brouillés des modules RNG1, ENC et FCC. D'autres méthodes telles que des méthodes d'obfuscation de programmes peuvent être employées pour rendre le code d'un programme impénétrable et ainsi masquer le fonctionnement du programme chargé dans le processeur, et/ou empêcher que le fonctionnement du programme puisse être dévoilé, ou que le programme puisse être modifié par une personne non habilitée. De telles méthodes sont décrites par exemple dans le document "Obfuscating Circuits via Composite-Order Graded Encoding" Benny Applebaumy, Zvika Brakerskiz, IACR-TCC 12/01/2015, ou bien dans le document "How to Obfuscate Programs Directly", Joe Zimmerman, IACR, 30/09/2014.

Il convient également de noter que certains processeurs graphiques équipant notamment des terminaux mobiles peuvent ne pas être suffisamment puissants pour exécuter les opérations décrites précédemment. Le processeur principal HP du terminal peut être utilisé pour exécuter tout ou partie des fonctions décrites précédemment à la place du processeur graphique GP, la sécurité du procédé de transaction étant assurée par la mise en œuvre de ces fonctions sous la forme de programme impénétrable. Un tel programme s'avère impossible mathématiquement à décoder par ingénierie inverse. Il n'est pas non plus possible d'exploiter les données d'entrée du programme, si le résultat de son exécution dépend d'une valeur aléatoire générée par le programme. A noter également qu'un composant protégé peut faire l'objet d'analyses par canal auxiliaire ("side channel") consistant à mesurer des variations de consommation électrique du composant ou de champ électromagnétique émis par le composant. L'architecture d'un tel composant peut également être analysée au microscope électronique. Au contraire, de telles analyses sont inefficaces pour déterminer la sémantique d'un programme impénétrable.

Par ailleurs, l'affichage d'une image comportant des parties constituées de motifs de pixels rafraîchis individuellement à des instants aléatoires et se combinant pour former une image intelligible en exploitant la persistance du système visuel humain constitue une invention à part entière pouvant être mise en œuvre séparément du procédé de partage d'une donnée secrète. Ainsi, l'invention n'est pas limitée à un procédé d'authentification combinant un procédé de partage d'une donnée secrète, et l'affichage d'une image d'un clavier ayant une répartition de touches définie aléatoirement, sous la forme d'une succession de trames humainement inintelligibles individuellement. En effet, il peut être envisagé d'authentifier un utilisateur sans partage de donnée secrète, uniquement sur la base d'un code secret introduit par l'utilisateur en fonction d'une image d'un clavier ayant une répartition de touches définie aléatoirement, affichée sous la forme d'une succession de trames humainement inintelligibles individuellement. Par ailleurs, le procédé de partage d'une donnée secrète présente d'autres usages que l'authentification d'un utilisateur. Par exemple, le procédé de partage d'une donnée secrète peut être mis en œuvre pour établir une liaison sécurisée entre un terminal et un serveur ou un processeur sécurisé inséré dans le terminal.

A noter également que l'image affichée d'un clavier peut être remplacée par toute autre image dans laquelle l'utilisateur est invité à sélectionner des zones associées chacune à un libellé ou une icône, ces zones ayant des positions respectives dans l'image définies aléatoirement. Ainsi, les libellés ou icônes affichées peuvent représenter des chiffres, des lettres, des symboles, des pictogrammes, ou encore des messages pouvant présenter par exemple des données de transaction. L'image affichée peut présenter un challenge et des zones à sélectionner présentant des réponses possibles au challenge, ou des libellés de touches à sélectionner dans un certain ordre spécifié dans le challenge.

## Revendications

1. Procédé d'authentification d'un utilisateur par un processeur sécurisé (SRV, SE), le procédé comprenant des étapes consistant à :
exécuter par un terminal (MT) de l'utilisateur un programme impénétrable (APG, APG1), configurant le terminal pour afficher sur un écran d'affichage du terminal une image (IM) présentant des zones à sélectionner associées chacune à un libellé ou une icône et ayant une répartition dans l'image définie par une première donnée aléatoire (RN1), l'image comprenant des trames (IM1) non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur,
recueillir par le terminal des positions de l'écran d'affichage (Pos<i>) désignées par l'utilisateur au moyen d'un organe de commande du terminal, en relation avec l'image affichée,
transmettre par le terminal au processeur sécurisé les positions désignées par l'utilisateur, et
vérifier par le processeur sécurisé les positions désignées par rapport à l'image affichée, l'utilisateur étant authentifié si les positions désignées correspondent à une donnée d'authentification de l'utilisateur, connue du processeur sécurisé.

2. Procédé selon la revendication 1, comprenant une étape de transmission d'au moins une partie du programme impénétrable (APG, APG1) par le processeur sécurisé au terminal (MT).

3. Procédé selon la revendication 2, dans lequel le programme (APG1) configure le terminal (MT) pour afficher des données de transaction.

4. Procédé selon l'une des revendications 1 à 3, dans lequel le programme (APG1) transmis par le processeur sécurisé (SRV, SE) au terminal (MT), configure le terminal pour afficher les libellés des zones à sélectionner dans l'image en des positions dans chaque zone et/ou avec une taille, et/ou avec une police de caractères, spécifiques du programme.

5. Procédé selon l'une des revendications 1 à 4, dans lequel l'affichage de l'image (IM1) par le terminal (MT) comprend des étapes successives de sélection d'une décomposition en motifs de pixels complémentaires pour chaque pixel ou groupe de pixels de l'image, représentant les libellés ou icônes de zone à sélectionner, et pour chaque décomposition sélectionnée, de génération de motifs de pixels complémentaires (EP1, EP2), de manière à ce que les libellés ou icônes des zones à sélectionner ne soient visibles à l'écran d'affichage que si les motifs de pixels complémentaires sont affichés successivement à une cadence adaptée pour exploiter la rémanence du système visuel de l'utilisateur.

6. Procédé selon l'une des revendications 1 à 5, dans lequel l'affichage de l'image (IM1) par le terminal (MT) comprend des étapes successives d'affichage par le terminal des motifs de pixels (P1, P2, P3) générés à des instants sélectionnés aléatoirement, espacés d'une durée (TP1, TP2, TP3) variable telle que le système visuel humain puisse les combiner bien qu'ils soient affichés successivement, les instants d'affichage (t1, t2, t3) des motifs de pixels formant une image affichée étant distincts et indépendants les uns des autres.

7. Procédé selon l'une des revendications 1 à 6, dans lequel le programme impénétrable transmis par le processeur sécurisé (SRV, SE) au terminal (MT) configure le terminal pour :
générer la première donnée aléatoire (RN1) à partir de laquelle est définie la répartition des libellés ou icônes de zone à sélectionner dans l'image, et
transmettre sous forme chiffrée (ERN1) la première donnée aléatoire au processeur sécurisé, le procédé comprenant des étapes consistant à :
déchiffrer la première donnée aléatoire par le processeur sécurisé,
déterminer par le processeur sécurisé la répartition des libellés ou icônes de zone à sélectionner dans l'image affichée par le terminal, et
déterminer par le processeur sécurisé un code secret introduit par l'utilisateur à partir des positions désignées par l'utilisateur et la répartition des libellés ou icônes de zone à sélectionner.

8. Procédé selon l'une des revendications 1 à 7, dans lequel le programme impénétrable (APG, APG1) comprend un module (RNG2) de génération de nombres aléatoires ou pseudo-aléatoire pour générer une seconde donnée aléatoire (RN2) utilisée pour sélectionner une décomposition en motifs de pixels complémentaires pour chaque pixel ou groupe de pixels de l'image représentant un libellé ou une icône de zone à sélectionner de l'image.

9. Procédé selon la revendication 7 ou 8, comprenant une étape d'établissement d'une liaison entre le terminal (MT) et le processeur sécurisé (SRV, SE), la liaison étant sécurisée au moyen de la première donnée aléatoire (RN1).

10. Procédé selon l'une des revendications 1 à 9, dans lequel le programme impénétrable (APG, APG1) transmis par le processeur sécurisé (SRV, SE) au terminal (MT) configure le terminal pour occuper au moins à 80% les ressources de calcul du processeur exécutant le programme.

11. Procédé selon l'une des revendications 1 à 10, dans lequel le programme impénétrable (APG, APG1) transmis par le processeur sécurisé (SRV, SE) et exécuté par le terminal (MT) comporte un circuit brouillé (RNG1, FCC, ENC) comprenant des portes logiques réparties en plusieurs rangs ordonnés, comprenant un premier rang rassemblant des portes logiques recevant exclusivement des valeurs d'entrée du circuit brouillé, les portes logiques d'un certain rang recevant exclusivement des valeurs issues de portes logiques appartenant à des rangs inférieurs ou des valeurs d'entrée du circuit brouillé, chaque porte logique étant associée à des valeurs brouillées représentant chaque valeur binaire possible de chaque bit d'entrée et de chaque bit de sortie de la porte logique, chaque porte logique étant associée à une table de vérité comprenant pour chaque combinaison possible des valeurs binaires d'entrée de la porte logique une valeur obtenue par chiffrement de la valeur brouillée représentant la valeur de sortie de la porte logique correspondant à la combinaison des valeurs binaires d'entrée de la porte logique, l'exécution du circuit brouillé par le processeur graphique comprenant des étapes consistant à :
exécuter successivement les rangs de portes logiques en respectant l'ordre des rangs, l'exécution de chacun des rangs de portes logiques consistant à exécuter simultanément toutes les portes logique du rang, l'exécution d'une porte logique comprenant des étapes de sélection d'une ligne de la table de vérité associée à la porte logique, en fonction des valeurs brouillées d'entrée de la porte logique, et de déchiffrement de la ligne sélectionnée pour obtenir une valeur brouillée de sortie de la porte logique, et
transférer les valeurs brouillées de sortie obtenues, à appliquer à une entrée de porte logique appartenant à un rang supérieur, d'une zone mémoire de sortie (VMEM) vers une zone mémoire d'entrée (GMEM), de manière à être prises en compte lors de l'exécution du rang de portes logiques supérieur.

12. Procédé selon la revendication 11, dans lequel l'exécution du circuit brouillé (RNG1, FCC, ENC) est réalisée par un interpréteur (GCI) réalisé lui-même au moins en partie sous la forme d'un circuit brouillé.

13. Procédé selon l'une des revendications 1 à 12, dans lequel la première et/ou seconde donnée aléatoire (RN1, RN2) est générée :
à l'aide d'un circuit brouillé (RNG1, RNG2) comprenant un premier rang de portes logiques associées à des tables de vérité présentant des lignes identiques mais ordonnées différemment, de manière à fournir des données de sortie différentes pour de mêmes données d'entrée, les données de sortie du premier rang de portes logiques étant fournies à un rang de portes logiques suivant en fonction d'un ordre dans lequel elles sont fournies par le premier rang de portes logiques, et/ou
en lançant simultanément l'exécution de plusieurs opérations identiques s'exécutant en parallèle, la donnée aléatoire générée dépendant de l'ordre dans lequel se terminent les opérations.

14. Procédé selon l'une des revendications 1 à 13, dans lequel le processeur sécurisé est un serveur (SRV) auquel le terminal (MT) est connecté, ou bien est intégré dans un support inséré dans le terminal (MT).

15. Terminal configuré pour :
exécuter un programme impénétrable (APG, APG1), configurant le terminal pour afficher sur un écran d'affichage du terminal une image (IM) présentant des zones à sélectionner associées chacune à un libellé ou une icône et ayant une répartition dans l'image définie par une donnée aléatoire (RN1), l'image comprenant des trames (IM1) non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur,
recueillir des positions de l'écran d'affichage (Pos<i>) désignées par l'utilisateur au moyen d'un organe de commande du terminal, en relation avec l'image affichée, et
transmettre à un processeur sécurisé (SRV, SE) les positions désignées par l'utilisateur, l'utilisateur étant authentifié par le processeur sécurisé si les positions désignées correspondent à une donnée d'authentification de l'utilisateur, connue du processeur sécurisé.

16. Terminal selon la revendication 15, configuré pour mettre en œuvre le procédé selon l'une des revendications 2 à 14.

17. Serveur configuré pour :
recevoir d'un terminal (MT) une requête de programme impénétrable exécutable par un processeur graphique du terminal, la requête contenant un identifiant (UID) d'un utilisateur du terminal,
générer un programme impénétrable (APG, APG1) exécutable par le terminal et configurant le terminal pour afficher sur un écran d'affichage du terminal une image (IM) présentant des zones à sélectionner associées chacune à un libellé ou une icône et ayant une répartition dans l'image définie par une première donnée aléatoire (RN1), l'image comprenant des trames (IM1) non intelligibles individuellement pour l'utilisateur, affichées successivement à une cadence adaptée pour exploiter la rémanence du système visuel de l'utilisateur afin que les libellés ou icônes apparaissent à l'écran d'affichage d'une manière intelligible pour l'utilisateur,
transmettre au terminal le programme impénétrable généré,
recevoir du terminal des positions désignées par rapport à l'image affichée, et
authentifier l'utilisateur si les positions désignées correspondent à une donnée d'authentification de l'utilisateur, connue du serveur,
le serveur étant en outre configuré pour mettre en œuvre le procédé selon l'une des revendications 1 à 14.

18. Programme d'ordinateur qui, lorsqu'il est chargé et exécuté par un terminal (MT), configure le terminal pour mettre en œuvre le procédé selon l'une des revendications 1 à 14.

## Patentansprüche

1. Verfahren zur Authentifizierung eines Benutzers durch einen gesicherten Prozessor (SRV, SE), wobei das Verfahren die folgenden Schritte umfasst:
Ausführen, durch ein Endgerät des Benutzers (MT), eines unzugänglichen Programms (APG, APG1), welches das Endgerät konfiguriert, um auf einem Anzeigebildschirm des Endgeräts ein Bild (IM) anzuzeigen, das auszuwählende Bereiche aufweist, die jeweils einem Label oder einem Icon zugeordnet sind und eine Verteilung im Bild aufweisen, die durch eine erste Zufallsangabe (RN1) definiert ist, wobei das Bild Raster (IM1) umfasst, die für den Benutzer nicht einzeln verständlich sind, die nacheinander in einem Takt angezeigt werden, der für die Nutzung der Remanenz des visuellen Systems des Benutzers geeignet ist, damit die Labels oder Icons auf dem Anzeigebildschirm in einer für den Benutzer verständlichen Weise erscheinen, Erfassen, durch das Endgerät, der Positionen des Anzeigebildschirms (Pos<i>), die von dem Benutzer mittels eines Steuerorgans des Endgeräts bezeichnet werden, in Verbindung mit dem angezeigten Bild, Übertragen, durch das Endgerät an den gesicherten Prozessor, der von dem Benutzer bezeichneten Positionen, und Überprüfen, durch den gesicherten Prozessor, der in Bezug auf das angezeigte Bild bezeichneten Positionen, wobei der Benutzer authentifiziert wird, wenn die bezeichneten Positionen einer Authentifizierungsangabe des Benutzers entsprechen, die dem gesicherten Prozessor bekannt ist.

2. Verfahren nach Anspruch 1, umfassend einen Schritt des Übertragens mindestens eines Teils des unzugänglichen Programms (APG, APG1) durch den gesicherten Prozessor an das Endgerät (MT).

3. Verfahren nach Anspruch 2, wobei das Programm (APG1) das Endgerät (MT) konfiguriert, um Transaktionsdaten anzuzeigen.

4. Verfahren nach einem der Ansprüche 1 bis 3, wobei das vom gesicherten Prozessor (SRV, SE) an das Endgerät (MT) übertragene Programm (APG1) das Endgerät konfiguriert, um die Labels der in dem Bild auszuwählenden Bereiche an Positionen in jedem Bereich und/oder mit einer Größe und/oder mit Schriftart anzuzeigen, die programmspezifisch sind.

5. Verfahren nach einem der Ansprüche 1 bis 4, wobei das Anzeigen des Bildes (IM1) durch das Endgerät (MT) aufeinanderfolgende Schritte der Auswahl einer Zerlegung in komplementäre Pixelmotive für jedes Pixel oder jede Pixelgruppe des Bildes, welche die Labels oder Icons eines auszuwählenden Bereichs darstellen, und für jede ausgewählte Zerlegung einer Erzeugung komplementärer Pixelmotive (EP1, EP2) umfasst, so dass die Labels oder Icons der auszuwählenden Bereiche nur dann auf dem Anzeigebildschirm sichtbar sind, wenn die komplementären Pixelmotive aufeinanderfolgend in einem Takt angezeigt werden, der für die Nutzung der Remanenz des visuellen Systems des Benutzers geeignet ist.

6. Verfahren nach einem der Ansprüche 1 bis 5, wobei das Anzeigen des Bildes (IM1) durch das Endgerät (MT) aufeinanderfolgende Schritte des Anzeigens durch das Endgerät der Pixelmotive (P1, P2, P3) umfasst, die zu zufällig ausgewählten Zeitpunkten erzeugt wurden, beabstandet durch eine variable Dauer (TP1, TP2, TP3), so dass sie das visuelle System des Menschen kombinieren kann, obwohl sie aufeinanderfolgend angezeigt werden, wobei die Anzeigezeitpunkte (t1, t2, t3) der Pixelmotive, die ein angezeigtes Bild bilden, unterschiedlich und unabhängig voneinander sind.

7. Verfahren nach einem der Ansprüche 1 bis 6, wobei das von dem abgesicherten Prozessor (SRV, SE) an das Endgerät (MT) übertragene unzugängliche Programm das Endgerät konfiguriert, um:
die erste Zufallsangabe (RN1) zu erzeugen, auf deren Basis die Verteilung der Labels oder Icons eines im Bild auszuwählenden Bereichs definiert ist, und die erste Zufallsangabe in verschlüsselter Form (ERN1) an den gesicherten Prozessor zu übertragen, wobei das Verfahren die folgenden Schritte umfasst:
Entschlüsseln der ersten Zufallsangabe durch den gesicherten Prozessor, Bestimmen, durch den gesicherten Prozessor, der Verteilung der Labels oder Icons eines im von dem Endgerät angezeigten Bild auszuwählenden Bereichs, und Bestimmen, durch den gesicherten Prozessor, eines von dem Benutzer auf der Basis der von dem Benutzer angegebenen Positionen und der Verteilung der Labels oder Icons eines auszuwählenden Bereichs eingegebenen Geheimcodes.

8. Verfahren nach einem der Ansprüche 1 bis 7, wobei das unzugängliche Programm (APG, APG1) ein Modul (RNG2) zum Erzeugen von Zufalls- oder Pseudozufallszahlen umfasst, um eine zweite Zufallsangabe (RN2) zu erzeugen, die verwendet wird, um eine Zerlegung in komplementäre Pixelmotive für jedes Pixel oder jede Pixelgruppe des Bildes auszuwählen, die ein Label oder ein Icon eines auszuwählenden Bereichs des Bildes darstellt.

9. Verfahren nach Anspruch 7 oder 8, umfassend einen Schritt der Herstellung einer Verbindung zwischen dem Endgerät (MT) und dem gesicherten Prozessor (SRV, SE), wobei die Verbindung mittels der ersten Zufallsangabe (RN1) gesichert wird.

10. Verfahren nach einem der Ansprüche 1 bis 9, wobei das unzugängliche Programm (APG, APG1), das von dem gesicherten Prozessor (SRV, SE) an das Endgerät (MT) übertragen wird, das Endgerät konfiguriert, um mindestens 80% der Rechenressourcen des das Programm ausführenden Prozessors zu belegen.

11. Verfahren nach einem der Ansprüche 1 bis 10, wobei das unzugängliche Programm (APG, APG1), das von dem gesicherten Prozessor (SRV, SE) übertragen und von dem Endgerät (MT) ausgeführt wird, eine verschlüsselte Schaltung (RNG1, FCC, ENC) aufweist, die Logikgatter umfasst, die in mehrere geordnete Reihen unterteilt sind, umfassend eine erste Reihe, die Logikgatter enthält, die ausschließlich Eingangswerte der verschlüsselten Schaltung empfangen, wobei die Logikgatter eine bestimmten Reihe ausschließlich Werte von Logikgattern empfangen, die zu niedrigeren Reihen gehören, oder Eingangswerte der verschlüsselten Schaltung, wobei jedes Logikgatter verschlüsselten Werten zugeordnet ist, die jeden möglichen binären Wert jedes Eingangsbits und jedes Ausgangsbits des Logikgatters darstellen, wobei jedes Logikgatter einer Wahrheitstabelle zugeordnet ist, die für jede mögliche Kombination der binären Eingangswerte des Logikgatters einen Wert umfasst, den mandurch Chiffrieren des verschlüsselten Wertes erhält, der den Ausgangswert des Logikgatters darstellt, welcher der Kombination der binären Eingangswerte des Logikgatters entspricht, wobei die Ausführung der verschlüsselten Schaltung durch den Grafikprozessor die folgenden Schritte umfasst:
aufeinanderfolgendes Ausführen der Reihen von Logikgattern in der Reihenfolge der Reihen, wobei die Ausführung jeder der Reihen von Logikgattern darin besteht, alle Logikgatter der Reihe gleichzeitig auszuführen, wobei die Ausführung eines Logikgatters die Schritte des Auswählens einer Zeile der dem Logikgatter zugeordneten Wahrheitstabelle in Abhängigkeit von den verschlüsselten Eingangswerten des Logikgatters und des Entschlüsselns der ausgewählten Zeile umfasst, um einen verschlüsselten Ausgangswert des Logikgatters zu erhalten, und Übertragen der erhaltenen verschlüsselten Ausgangswerte, die auf einen Eingang eines Logikgatters anzuwenden sind, das zu einer höheren Reihe gehört, von einem Speicherausgangsbereich (VMEM) an einen Speichereingangsbereich (GMEM) derart, dass sie bei der Ausführung der höheren Logikgatterreihe berücksichtigt werden.

12. Verfahren nach Anspruch 11, wobei die Ausführung der verschlüsselten Schaltung (RNG1, FCC, ENC) durch einen Interpreter (GCI) erfolgt, der selbst mindestens teilweise in Form einer verschlüsselten Schaltung vorliegt.

13. Verfahren nach einem der Ansprüche 1 bis 12, wobei die erste und/oder zweite Zufallsangabe (RN1, RN2) erzeugt wird:
mit Hilfe einer verschlüsselten Schaltung (RNG1, RNG2), die eine erste Reihe von Logikgattern umfasst, die Wahrheitstabellen zugeordnet sind, die identische, aber unterschiedlich geordnete Zeilen aufweisen, so dass unterschiedliche Ausgangsdaten für die gleichen Eingangsdaten bereitgestellt werden, wobei die Ausgangsdaten der ersten Reihe von Logikgattern einer nächsten Reihe von Logikgattern in Abhängigkeit von einer Reihenfolge bereitgestellt werden, in welcher sie durch die ersten Reihe von Logikgattern bereitgestellt werden, und/oder durch gleichzeitiges Einleiten der Ausführung mehrerer identischer Operationen, die parallel ausgeführt werden, wobei die erzeugte Zufallsangabe von der Reihenfolge abhängt, in welcher die Operationen beendet werden.

14. Verfahren nach einem der Ansprüche 1 bis 13, wobei der gesicherte Prozessor ein Server (SRV) ist, mit dem das Endgerät (MT) verbunden ist, oder in einen in das Endgerät (MT) eingesetzten Träger integriert ist.

15. Endgerät, das konfiguriert ist, um:
ein unzugängliches Programms (APG, APG1) auszuführen, welches das Endgerät konfiguriert, um auf einem Anzeigebildschirm des Endgeräts ein Bild (IM) anzuzeigen, das auszuwählende Bereiche aufweist, die jeweils einem Label oder Icon zugeordnet sind und eine Verteilung in dem Bild aufweisen, die durch eine Zufallsangabe (RN1) definiert ist, wobei das Bild Raster (IM1) umfasst, die für den Benutzer nicht einzeln verständlich sind, die nacheinander in einem Takt angezeigt werden, der für die Nutzung der Remanenz des visuellen Systems des Benutzers geeignet ist, damit die Labels oder Icons auf dem Anzeigebildschirm in einer für den Benutzer verständlichen Weise erscheinen, Positionen des Anzeigebildschirms (Pos<i>) zu erfassen, die von dem Benutzer mittels eines Steuerorgans des Endgeräts bezeichnet werden, in Verbindung mit dem angezeigten Bild, und die von dem Benutzer bezeichneten Positionen an einen gesicherten Prozessor (SRV, SE) zu übertragen, wobei der Benutzer von dem gesicherten Prozessor authentifiziert wird, wenn die bezeichneten Positionen einer Authentifizierungsangabe des Benutzers entsprechen, die dem gesicherten Prozessor bekannt ist.

16. Endgerät nach Anspruch 15, das konfiguriert ist, um das Verfahren nach einem der Ansprüche 2 bis 14 durchzuführen.

17. Server, der konfiguriert ist, um:
von einem Endgerät (MT) eine Anforderung eines unzugänglichen Programms zu empfangen, das von einem Grafikprozessor des Endgeräts ausführbar ist, wobei die Anforderung ein Kennwort (UID) eines Endgerätbenutzers enthält, ein unzugängliches Programms (APG, APG1) zu erzeugen, das vom Endgerät ausführbar ist und das Endgerät konfiguriert, um auf einem Anzeigebildschirm des Endgeräts ein Bild (IM) anzuzeigen, das auszuwählende Bereiche aufweist, die jeweils einem Label oder Icon zugeordnet sind und eine Verteilung in dem Bild aufweisen, die durch eine erste Zufallsangabe (RN1) definiert ist, wobei das Bild Raster (IM1) umfasst, die für den Benutzer nicht einzeln verständlich sind, die nacheinander in einem Takt angezeigt werden, der für die Nutzung der Remanenz des visuellen Systems des Benutzers geeignet ist, damit die Labels oder Icons auf dem Anzeigebildschirm in einer für den Benutzer verständlichen Weise erscheinen, Übertragen, an das Endgerät, des erzeugten unzugänglichen Programms, Empfangen, von dem Endgerät, der in Bezug auf das angezeigte Bilde bezeichneten Positionen, und Authentifizieren des Benutzers, wenn die bezeichneten Positionen einer Authentifizierungsangabe des Benutzers entsprechen, die dem Server bekannt ist, wobei der Server ferner konfiguriert ist, um das Verfahren nach einem der Ansprüche 1 bis 14 durchzuführen.

18. Rechnerprogramm, das, wenn es von einem Endgerät (MT) geladen ist und ausgeführt wird, das Endgerät konfiguriert, um das Verfahren nach einem der Ansprüche 1 bis 14 durchzuführen.

## Claims

1. A method of authenticating a user by a secure processor (SRV, SE), the method comprising the steps of:
executing, by a user terminal (MT), an impenetrable program (APG, APG1) that configures the terminal to display on a display screen of the terminal an image (IM) presenting selectable areas, each assigned with a label or a icon and having a distribution in the image defined by first random data (RN1), the image comprising frames (IM1) not intelligible individually for the user, displayed successively at a rate adapted to exploit the persistence of the vision system of the user so that the labels or icons appear on the display screen in a manner that is intelligible to the user,
collecting by the terminal positions of the display screen (Pos<i>) designated by the user by means of an interface of the terminal, in relation to the displayed image,
transmitting by the terminal to the secure processor the positions designated by the user, and
verifying by the secure processor the designated positions relative to the displayed image, the user being authenticated if the designated positions correspond to an authentication data of the user, known to the secure processor.

2. The method of claim 1 including a step of transmitting at least part of the impenetrable program (APG, APG1) by the secure processor to the terminal (MT).

3. The method of claim 2, wherein the program (APG1) configures the terminal (MT) to display transaction data.

4. The method according to one of claims 1 to 3, wherein the program (APG1) transmitted by the secure processor (SRV, SE) to the terminal (MT) configures the terminal to display the labels of the selectable areas in the image at positions in each area, and/or with a size, and/or with a font, specific to the program.

5. The method according to one of claims 1 to 4, wherein the display of the image (IM1) by the terminal (MT) comprises successive steps of selecting a decomposition in complementary pixel patterns for each pixel or group of pixels of the image representing the labels or icons of the selectable areas, and for each selected decomposition, generating complementary pixel patterns (EP1, EP2), so that the labels or icons of the selectable areas are visible on the display screen only if the complementary pixel patterns are displayed successively at a rate adapted to exploit the persistence of the vision system of the user.

6. The method according to one of claims 1 to 5, wherein the display of the image (IM1) by the terminal (MT) comprises successive steps of displaying by the terminal the generated pixel patterns (P1, P2, P3) at randomly selected times, spaced apart by a variable duration (TP1, TP2, TP3), such that the human vision system can combine them although they are displayed successively, the display times (t1, t2, t3) of pixel patterns forming a displayed image being distinct and independent of one another.

7. The method according to one of claims 1 to 6, wherein the impenetrable program transmitted by the secure processor (SRV, SE) to the terminal (MT) configures the terminal to:
generate the first random data (RN1) from which the distribution of the labels or icons of the selectable areas in the image is defined, and
transmit the first random data to the secure processor in encrypted form (ERN1), the method comprising the steps of:
decrypting the first random data by the secure processor,
determining by the secure processor the distribution of the labels or icons of the selectable areas in the image displayed by the terminal, and
determining by the secure processor a secret code entered by the user from the positions designated by the user and the distribution of the labels or icons of the selectable areas.

8. The method according to one of claims 1 to 7, wherein the impenetrable program (APG, APG1) comprises a random or pseudo-random number generation component (RNG2) for generating second random data (RN2) used to select a complementary pixel pattern decomposition for each pixel or group of pixels in the image representing a label or an icon of a selectable area of the image.

9. The method according to claim 7 or 8, comprising a step of establishing a link between the terminal (MT) and the secure processor (SRV, SE), the link being secured by means of the first random data (RN1).

10. The method according to one of claims 1 to 9, wherein the impenetrable program (APG, APG1) transmitted by the secure processor (SRV, SE) to the terminal (MT) configures the terminal to occupy at least 80% of the computing resources of the processor running the program.

11. The method according to one of claims 1 to 10, wherein the impenetrable program (APG, APG1) transmitted by the secure processor (SRV, SE) and executed by the terminal (MT) comprises a garbled circuit (RNG1, FCC, ENC) including logic gates distributed in several ordered levels, comprising a first level gathering logic gates exclusively receiving input values of the garbled circuit, the logic gates of a certain level receiving exclusively values from logic gates belonging to lower levels or input values of the garbled circuit, each logic gate being associated with garbled values representing each possible bit value of each input bit and each output bit of the logic gate, each logic gate being associated with a truth table including for each possible combination of input binary values of the logic gate a value obtained by encryption of the garbled value representing the output value of the logic gate corresponding to the combination of the input bit values of the logic gate, the execution of the garbled circuit by a graphics processor comprising the steps of:
successively executing the levels of logic gates in the order of the levels, the execution of each of the levels of logic gates including executing all the logic gates of the level simultaneously, the execution of a logic gate comprising steps of selecting a row of the truth table associated with the logic gate, as a function of the garbled input values of the logic gate, and decrypting the selected row to obtain a garbled output value of the logic gate, and
transferring the resulting garbled output values to apply them to a higher level logic gate input, from an output memory area (VMEM) to an input memory area (GMEM) so that they are taken into account when executing the next level of logic gates.

12. The method of claim 11, wherein the execution of the garbled circuit (RNG1, FCC, ENC) is performed by an interpreter (GCI) itself realized at least partly in the form of a garbled circuit.

13. The method according to one of claims 1 to 12, wherein the first and/or second random data (RN1, RN2) is generated:
using a garbled circuit (RNG1, RNG2) comprising a first level of logic gates associated with tables having identical rows but ordered differently, so as to provide different output data for the same input data, the output data of the first level of logic gates being provided to a next level of logic gates according to an order in which they are provided by the first level of logic gates, and/or
by simultaneously launching the execution of several identical operations executing in parallel, the random data generated depending on the order in which the operations end.

14. The Method according to one of claims 1 to 13, wherein the secure processor is a server (SRV) to which the terminal (MT) is connected, or is integrated in a device inserted in the terminal (MT).

15. A terminal configured for:
executing an impenetrable program (APG, APG1) configuring the terminal to display on a display screen of the terminal an image (IM) presenting selectable areas, each associated with a label or an icon and having a distribution in the image defined by random data (RN1), the image comprising frames (IM1) unintelligible individually for the user, displayed successively at a rate adapted to exploit the persistence of the vision system of the user so that the labels or icons appear on the screen display in an intelligible manner to the user,
collecting positions of the display screen (Pos<i>) designated by the user by means of an interface of the terminal, in relation to the displayed image, and
transmitting to a secure processor (SRV, SE) the positions designated by the user, the user being authenticated by the secure processor if the designated positions correspond to authentication data of the user, known to the secure processor.

16. The terminal of claim 15 configured to implement the method according to one of claims 2 to 14.

17. A server configured to:
receive from a terminal (MT) an impenetrable program request executable by a graphics processor of the terminal, the request containing an identifier (UID) from a user of the terminal,
generate an impenetrable program (APG, APG1) executable by the terminal and configuring the terminal to display on a display screen of the terminal an image (IM) having selectable areas, each associated with a label or an icon and having a distribution in the image defined by first random data (RN1), the image including frames (IM1) that are not individually intelligible to the user, displayed successively at a rate adapted to exploit the persistence of the user's vision system so that the labels or icons appear on the display screen in a manner that is intelligible to the user,
transmit to the terminal the generated impenetrable program,
receive from the terminal designated positions relative to the displayed image, and
authenticate the user if the designated positions correspond to authentication data of the user, known to the server,
the server being further configured to implement the method according to one of claims 1 to 14.

18. A computer program which, when loaded and executed by a terminal (MT), configures the terminal to implement the method according to one of claims 1 to 14.
